# EUROPEAN PATENT APPLICATION

(11) **EP 1 876 365 A1**
(43) Date of publication of application: **09.01.2008**
(21) Application number: 05820288.8
(22) Date of filing: 21.12.2005
(51) Int. Cl.: F16C 33/54, B21D 53/12, F16C 19/46

(54) **RETAINER FOR RADIAL NEEDLE BEARING, METHOD OF MANUFACTURING THE SAME, AND RADIAL NEEDLE BEARING**

(30) Priority: 25.04.2005 JP 2005126768; 09.11.2005 JP 2005325104
(71) Applicant: NSK Ltd., Tokyo 141-8560 (JP)
(72) Inventor: OOTSUKA, Kiyoshi c/o NSK,Ltd., Kanagawa 251- 8501 (JP); KOBAYASHI, Kazuto c/o NSK, Ltd., Kanagawa 251- 8501 (JP); SHINTOU, Isao c/o NSK, Ltd, Kanagawa 251- 8501 (JP); HORINO, Keiichi c/o NSK, Ltd., Kanagawa 251- 8501 (JP); MIZUSHIMA, Yuuki, c/o NSK, Ltd., Kanagawa 251- 8501 (JP)
(74) Representative: Schuster, Thomas
(86) International application number: PCT/JP2005/023536
(87) International publication number: WO 2006/114915

(57) **Abstract**

A cage element 18 in which pillar element portions 17, 17 are made to project from a rim portion 11 is manufactured by performing a punching process and a bending process on a metal plate. With rim portions 11, 11 of a pair of cage elements 18, 18 disposed concentrically with each other and phases in a circumferential direction of the respective pillar element portions 17, 17 made to coincide with each other, distal ends of the respective pillar element portions 17, 17 are butted to each other to be welded together, whereby respective pillar portions are made. The roundness of the respective rim portions 11, 11 and the shape accuracy and interval accuracy of these respective pillar portions are improved without performing troublesome processes, so as to solve the problem.

## Description

### Technical Field

The present invention relates to a cage for radial needle bearing and an improvement in a manufacturing method for the same and realizes a cage which enables stably obtaining a case with good quality and a manufacturing method for the same.

### Background Art

Radial needle bearings are incorporated in those of rotational support portions of automotive transmissions or various types of mechanical apparatuses portions where a large radial load is applied. For example, in a transmission of planetary gear type which makes up an automotive automatic transmission system, as is known through description in Patent Document No. 1 and the like, a planetary gear is rotationally supported relative to a carrier by a radial needle bearing. Fig. 33 shows an example of a rotational support system for a planetary gear which supports rotationally a planetary gear relative to a carrier like this type. In the case of a structure shown in Fig. 33, both end portions of a support shaft 3, which is a member corresponding to an inner ring corresponding member described in claims, are supported and fixed to a plurality of locations in a circumferential direction on a pair of support plates 2a, 2b making up a carrier 1 which are parallel to each other. In addition, a planetary gear 4, which is a member corresponding to an outer ring corresponding member described in the claims, is rotationally supported on a periphery of an intermediate portion of the support shaft 3 by means of a radial needle bearing 5.

In this radial needle bearing 5, a plurality of needles 6, 6 are held so as to freely roll by a cage 7, which is a cage for radial needle bearing, and with an outer circumferential surface of the intermediate portion of the support shaft 3 made to function as an inner ring raceway 8 formed into a cylindrical surface and an inner circumferential surface of the planetary gear 4 made to function as an outer ring raceway 9 formed into a cylindrical surface, rolling surfaces of the respective needles 6, 6 are brought into rolling contact with these inner ring raceway 8 and outer ring raceway 9. In addition, floating washers 10a, 10b are disposed between both axial end faces of the planetary gear 4 and internal surfaces of both the support plates 2a, 2b, respectively, so as to attempt to reduce frictional force which acts between both the axial end faces of the planetary gear 4 and the internal surfaces of both the support plates 2a, 2b.

The cage 7, which makes up the radial needle bearing 5, includes a pair of circular ring-shaped rim portions 11, 11 which are disposed so as to be spaced apart from each other in an axial direction (a left-to-right, or vice versa, direction in Figs. 33 to 35), as is shown in detail in Figs. 34 to 35, and a plurality of pillar portions 12, 12. The respective pillar portions 12, 12 are disposed intermittently over the circumferential direction and connect, respectively, at both end portions thereof to portions of the internal surfaces, which face each other, of both the rim portions 11, 11 which lie closer to outer diameter sides of the internal surfaces. In addition, the pillar portions 12, 12 each have a shape which is bent into a trapezoidal configuration towards an inner diameter direction at an axially intermediate portion thereof. Then, space portions which are surrounded by circumferential side edges of the respective pillar portions 12, 12 which neighbor each other in the circumferential direction and the internal surfaces, which face each other, of both the rim portions 11, 11 are made to constitute pockets 13, 13, and the respective needles 6, 6 are held in the respective pockets 13, 13 so as to roll freely therein.

As has conventionally been known through description in Patent Document No. 2 and the like, the cage 7, which has been configured in this way, is made by rounding a strip-like metal plate (in general, a steel plate or a stainless steel plate) into a cylindrical shape. Namely, although an illustration thereof is omitted, after a first-stage intermediate material having a basic cross-sectional shape as a cage is made by performing a pressing process on a strip-like metal plate, pockets 13, 13 for holding the respective needles 6, 6 so as to freely roll therein are punched out to be formed by performing a shearing process on the first-stage intermediate material, which is then made into a second-stage intermediate material. Furthermore, this second-stage intermediate material is cut to a predetermined length to thereby be made into a third-stage intermediate material 14 as is shown in Fig. 36.

Then, this third-stage intermediate material 14 is rounded into a cylindrical shape, and both end portions are butt welded together into a cage 7 as shown in Fig. 34. Note that in the case of the illustrated example, in order to restrict a radial position of the cage 7, an outer circumferential surface of the cage 7 is made to lie close to and face the outer ring raceway (refer to Fig. 33). Then, in operation, by causing the outer ring raceway 9 to guide (outer ring guide) the outer circumferential surface of the cage 7 which is made to lie close to and face the outer ring raceway in that way, the positioning of the cage 7 with respect to the radial direction is realized, so as to prevent the occurrence of vibration and noise.

In addition, on this case 7, locking projecting portions 15, 15 are provided in positions at both the end portions and along both the side edges of the respective pillar portions 12, 12 which are aligned with each other in the circumferential direction so as to project in the circumferential direction from respective side surfaces thereof These respective locking projecting portions 15, 15 are intended to prevent the respective needles 6, 6 which are held within the respective pockets 13, 13 so as to freely roll therein from being dislocated radially outwards from the pockets 13, 13. Namely, when building in the respective needles 6, 6 between the inner ring raceway 8 and the outer ring raceway 9 (refer to Fig. 33) together with the cage 7, these respective needles 6, 6 need to be held within the respective pockets 13, 13 in such a state that the radial dislocation thereof is prevented.

Because of this, the respective locking projecting portions 15, 15 are provided in openings of the respective pockets 13, 13 at portions which lie further radially outwards than pitch circles of the respective needles 6, 6 in such a state that the engaging projections face each other, and a space D15 between distal end edges of the respective locking projecting portions 15, 15 is made to be smaller than an outside diameter D6 (refer to Fig. 33) of the respective needles 6, 6 (D6 > D15). Together with this, a space D16 (refer to Fig. 34) between side edges, which face each other, of inner diameter side locking portions 16, 16 which are situated further radially inwards than the pitch circles of the respective needles 6, 6 at intermediate portions of the respective pillar portions 12, 12 is also made to be smaller than the outside diameter D6 (D6 > D16).

In order to hold the respective needles 6, 6 in the respective pockets 13, 13, these respective needles 6, 6 are pushed into these respective pockets 13, 13 from an inner diameter side of the cage 7. As this occurs, the spaces D16 between the side edges of the inner diameter side locking portions 16, 16 are elastically spread by the respective needles 6, 6, so as to allow these respective needles 6, 6 to pass through between these side edges. With the respective needles 6, 6 held within the respective pockets 13, 13 in this way, the respective needles 6, 6 are prevented from being dislocated radially outwards of the cage 7 by the respective locking projecting portions 15, 15 and radially inwards by the side edges of the inner diameter side locking portions 16, 16 of the respective pillar portions 12, 12. In addition, although illustration is omitted, there may be a case where the respective needles are pushed into the respective pockets from an outer diameter side of the cage. In addition, there may exist a cage which has no such respective locking projecting portions 15, 15 and respective inner diameter side locking portions 16, 16.

In the cage for radial needle bearing made of a metal plate which has the construction that has been described heretofore, it has been difficult to realize a good shape accuracy and hence has not necessarily been easy to obtain a good performance. This is because since the intermediate material 14 shown in Fig. 36 is rounded into the cylindrical shape and both the end portions are butt welded together into the cage shown in Figs. 33 to 35, the shape is worsened due to the following reasons (1) to (5).
(1) It is difficult to match the curvature of the portion where both the end portions of the intermediate material 14 rounded into the cylindrical shape are butt welded together with curvatures of other intermediate portions, whereby the roundness of the pair of rim portions 11, 11 is worsened.
(2) Also with respect to the longitudinal (vertical direction in Fig. 36) intermediate portion of the intermediate material 14, since the rigidity of portions which continue to the pillar portions 12, 12 differs from the rigidity between the respective continuous portions, it is difficult to form both the rim portions 11, 11 into correct circles. Specifically, a substantially polygonal shape results in which the respective continuous portions become a straight-line shape, while the portions between the respective continuous portions become an arc-like shape.
(3) Even though the intermediate material 14 is rounded, the cross-sectional shape of the portions which make up the respective pillar portions 12, 12 remains in the straight-line shape.
(4) Spaces between the pillar portions 12, 12 which neighbor each other in the circumferential direction are made easy to subtly differ from each other, and when they become different, width dimensions of the pockets 13, 13 become unequal.
(5) When the cross-sectional shape of the cage 7 is formed substantially into an M-shape as shown in Figs. 33 to 35, the shapes of the respective pillar portions 12, 12 are made easy to be deformed subtly during the process in which the intermediate material 14 is rounded due to influences from both the rim portions 11, 11.

In the case of the conventionally known cage for radial needle bearing and the manufacturing method for the same, there may be a case where the shape is worsened due to the reasons mentioned in (1) to (5) above, and as a result thereof, there was a possibility that the needles 6, 6 were made difficult to be incorporated into the respective pockets 13, 13 or on the contrary, the needles 6, 6, which were so incorporated, were dislocated therefrom abruptly. Although the aforesaid drawback can, of course, be prevented by performing a shape correcting process on the cage 7 which is built up in the way shown in Fig. 34, the costs are increased by such an extent, and therefore, it is not preferable. In addition, since the cage 7 is obtained which has the substantially M-shaped cross section described above, it is troublesome to produce an intermediate material 14 as shown in Fig. 36 from a strip-like metal plate, which makes up a cause for the increasing costs.
In addition, although an invention relating to a cage for radial needle bearing which is divided into two in an axial direction is described in Patent Document No. 3, the construction is such that the divided cages are left so divided and is not joined together, and the construction is basically different from the target construction of the invention.

Patent Document No. 1: JP-A-2002-235841
Patent Document No. 2: JP-A-8-270658
Patent Document No. 3: JP-A-2004-28134

### Problem that the Invention is to Solve

The invention is such as to have been invented in view of the situations that have been described above, with a view to realizing a cage for radial needle bearing which enables obtaining a cage with good quality in a stable fashion and a manufacturing method for the same.

### Means for Solving the Problem

Of a cage for radial needle bearing and a manufacturing method for the same of the invention, a cage for radial needle bearing set forth in a first aspect of the invention is such as to be manufactured of a metal plate as with the conventionally known cage for radial needle bearing through description in Patent Document No. 1 above. In addition, the cage for radial needle bearing includes a pair of circular ring shape rim portions which are provided at both axial end portions so as to face each other and a plurality of pillar portions which are provided so as to be extended between both the rim portions, wherein portions of which four sides thereof are surrounded by the pillar portions which neighbor each other in a circumferential direction and both the rim portions are made to be pockets.
In particular, in the cage for radial needle bearing set forth in the first aspect of the invention, the respective pillar portions are made by joining distal end portions of pillar element portions whose proximal end portions are made to continue to one rim portion of both the rim portions to the other rim portion or to distal end portions of pillar element portions whose proximal end portions are made to continue to the other rim portion.

When carrying out the invention set forth in the first aspect of the invention, preferably, as is described, for example, according to a second aspect of the invention, one of distal end edges of the pillar element portions which are formed, respectively, on both the rim portions and are joined together at distal end portions thereof is made into a concavely curved edge and the other distal end edge is made into a convexly curved edge which engages with the concavely curved edge. In addition, with phases of the respective pillar element portions aligned with each other with respect to a circumferential direction of the rim portion, the distal end edges of the respective pillar element portions are made to butt each other, and butted portions of the respective pillar element portions are welded together.
Alternatively, as is set forth in a third aspect of the invention, distal end edges of the respective pillar element portions which are formed, respectively, on both the rim portions are inclined alternately in opposite directions with respect to the circumferential direction of the rim portion and at the same angle. In addition, by causing the distal end edges which are inclined in the same direction to butt each other, with phases of the respective pillar element portions aligned with each other in the circumferential direction of the rim portion, butted portions of the distal end edges of the respective pillar element portions are welded together.
By configuring the cage in the ways described above, with the phases of the respective pillar element portions aligned correctly with each other, the cage with good quality can easily be obtained.

Furthermore, as is set forth in a fourth aspect of the invention, distal end portions of the respective pillar element portions which are formed, respectively, on both the rim portions can also be connected to each other by bringing recessed and raised engagement portions which are provided, respectively, on inner circumferential surfaces of the distal end portions of the pillar material portions on the one rim portion and outer circumferential surfaces of the distal end portions of the pillar material portions on the other rim portion into convexo-concave engagement.
By adopting the configuration like this, for example, in the event that the rotational speed in use is slow and a centrifugal force applied to the respective pillar element portions is limited, the welding of the distal ends of the respective pillar element portions can also be omitted.
In addition, as is set forth in the fifth aspect of the invention, in the event that joint portions where the distal end portions of the respective pillar element portions are joined together are provided in a position where needles held within the respective pockets do not contact the joint portions, the damaging of rolling surfaces of the needles by the joint portions can be prevented.

In addition, in order to obtain the construction in which the distal end portions of the respective pillar element portions are joined to the other rim portion, as is set forth in a sixth aspect of the invention, distal end faces of the respective pillar element portions formed on the one rim portion are welded or bonded to the other rim portion in such a state that the distal end faces are made to butt against portions on one axial side surface of the other rim portion which lie closer to an outer diameter side thereof.
Alternatively, as is set forth in a seventh aspect of the invention, distal end portions of the respective pillar element portions formed on the one rim portion are fitted in notches formed on an outer circumferential edge portion of the other rim portion. In addition, at least part of abutment surfaces between the distal end portion of the respective pillar element portions and inner surfaces of the respective notches is welded or bonded together.
Alternatively, as is set forth in an eighth aspect of the invention, stepped concaved portions which are recessed radially outwards are formed on inner circumferential surfaces of distal end portions of the respective pillar element portions formed on the one rim portion. In addition, portions of the distal end portions of the respective pillar element portions which lie in positions on the periphery of the stepped concaved portions are fitted in notches formed on an outer circumferential edge portion of the other rim portion, and elevated surfaces residing at end portions of the stepped concaved portions are made to butt an axial one side surface of the other rim portion. Then, at least part of abutment surfaces between the distal end portion of the respective pillar element portions and inner surfaces of the respective notches is welded or bonded together.

Additionally, a radial needle bearing set forth in a ninth aspect of the invention includes an inner ring corresponding member in which a cylindrical inner ring raceway is provided on an outer circumferential surface, an outer ring corresponding member in which a cylindrical outer ring raceway is provided on an inner circumferential surface, a plurality of needles which are provided between the inner ring raceway and the outer ring raceway so as to roll freely and a cage for holding the respective needles so as to roll freely.
In particular, in the radial needle bearing set forth in the ninth aspect of the invention, the cage includes the cage for radial needle bearing set forth in any of the first to eighth aspect of the invention.

Furthermore, a manufacturing method for a cage for radial needle bearing set forth in a tenth aspect of the invention firstly forms a cage element including a circular ring-shaped rim portion and a plurality of pillar element portions whose proximal end portions are made to connect to the rim portion, respectively, by performing a bending process and a punching process on a metal plate. Thereafter, the rim portion of the cage element and a rim portion which is worked separately are disposed concentrically with each other, and distal end portions of the respective pillar element portions are joined to the rim portion which is worked separately or distal end portions of a plurality of pillar element portions whose proximal end portions are made to connect, respectively, to the rim portion which is worked separately.

On the other hand, in carrying out the manufacturing method for a cage for radial needle bearing set forth in the tenth aspect of the invention, preferably, as is set forth in an eleventh aspect of the invention, firstly, by performing a punching process on part of a circular material plate, a circular ring portion which is to make up a rim portion and tongue pieces which are to make up pillar element portions which extend radially outwards from a plurality of locations lying at equal intervals along an outer circumferential edge of the circular ring portion. Thereafter, the circular ring portion is bent in an axial direction at a portion which lies closer to an outer diameter side thereof together with the respective tongue pieces, so that these respective tongue pieces are made into pillar element portions.
Alternatively, as is set forth in a twelfth aspect of the invention, firstly, by performing a punching process on part of a circular material plate, a circular hole which lies on an inner diameter side of a portion which is to make up a rim portion and a plurality of preparation hole portions which are disposed along a periphery of the circular hole at equal intervals with respect to a circumferential direction are formed. Thereafter, the circular material plate is bent in one direction along the full circumference of a portion which lies between the circular hole and the preparation hole portions, so as to form a cylindrical portion whose proximal end portion is made to continue to the portion which is to make up a rim portion. Following this, by removing portions which make up part of the cylindrical portion and whose phases with respect to the circumferential direction match the respective preparation hole portions from the respective preparation hole portions to a distal end edge of the cylindrical portion, portions between the portions which are removed with respect to the circumferential direction are made into respective pillar element portions.
In the event that the cage is configured in the ways described above, the member including the rim portion and the pillar element portions which has superior shape accuracy and dimension accuracy can be manufactured easily and at low costs.

In addition, in carrying out the manufacturing method for a cage for radial needle bearing set forth in the tenth aspect of the invention, preferably, as is set forth in a thirteenth aspect of the invention, firstly, by performing a punching process on part of a material plate, a first intermediate material is manufactured. This first intermediate material is such that a non-circular preparation hole having an inside diameter which is smaller than an inside diameter of a portion which is to make up a rim portion is formed in a radially central portion, pad portions which reside in the portion which is to make up a rim portion and portions which are to make up spaces between proximal half portions of respective pillar element portions are formed in a radially intermediate portion, and distal half portions of tongue pieces which are to make up distal half portions of the respective pillar element portions are formed circumferentially in a plurality of locations on a radially outer end portion.
Thereafter, the radially intermediate portion of the first intermediate material is bent further in a radially intermediate position thereof along the full circumference thereof, so that the relevant portion is formed into an L-shape in cross section which is made up of a circular ring portion and a cylindrical portion, whereby the first intermediate material is made into a second intermediate material.
Following this, the respective pad portions which are part of the cylindrical portion provided on the second intermediate material and which reside in the portions which are to make up the spaces between the proximal half portions of the respective pillar element portions are forcibly spread radially outwards. Then, by cutting to separate both end edge portions in the circumferential direction of the respective pad portions from both end edge portions in the circumferential direction of the proximal half portions of the respective pillar element portions, a plurality of tongue pieces which are to make up the respective pillar element portions are formed, whereby the second intermediate material is made into a third intermediate material.
Following this, a surface pressing process is applied to portions which are exposed between the respective tongue pieces at an end edge of the cylindrical portion while forcibly spreading the respective pad portions of the third intermediate material radially outwards, and the radius of curvature of a continuous portion between the cylindrical portion and the circular ring portion is made small, whereby the third intermediate material is made into a fourth intermediate material.
Following this, the respective pad portions are cut from a distal edge of the cylindrical portion, and a circular hole which matches an inside diameter of a portion which is to make up a rim portion is punched out in a central portion, whereby the fourth intermediate material is made into a fifth intermediate material.
Furthermore, the respective tongue pieces of the fifth intermediate material are bent, whereby the fifth intermediate material is then made into a cage element.
By configuring the method in this way, the properties of surfaces of the cage which are brought into contact with rolling surfaces or axial end faces of needles can be improved, and in addition to this, the radius of curvature of the continuous portion between the cylindrical portion and the circular ring portion which make up a rim portion can be made small. Because of this, damages such as harmful scratches are made difficult to be generated on the surfaces of the needles, and moreover, the axial dimension of the cage can be suppressed to a small dimension.

In the event that the invention set forth in the thirteenth aspect of the invention is carried out, more preferably, as is set forth in a fourteenth aspect of the invention, when making the first intermediate material into the second intermediate material, an elevated portion with respect to the circumferential direction is formed partially along the circumferential direction of the cylindrical portion in positions which lie substantially where both circumferential end edges of the respective pillar element portions are extended. Then, by virtue of existence of the elevated portion, an outer circumferential surface of a portion of part of an outer circumferential surface of the cylindrical portion where proximal half portions of the respective pillar element portions are extended is made to be situated further radially inwards than outer circumferential surfaces of other portions of the cylindrical portion.
By configuring the cage in this way, portions which neighbor the circular ring portion of the rim portion at both axial end portions of respective pillar portions made up of the respective pillar element portions can be positioned close (brought into sliding contact with) the rolling surfaces of the respective needles. In addition, the postures of the respective needles are stabilized (the skew thereof is prevented), thereby making it possible to increase the performance of the radial needle bearing.

In the event that the inventions set forth in the thirteenth and fourteenth aspects of the invention are carried out, more preferably, as is set forth in a fifteenth aspect of the invention, by performing a surface pressing process on portions which are exposed between the respective tongue pieces at the end edge of the cylindrical portion of the third intermediate material, whereby the third intermediate material is made into a fourth intermediate material, and furthermore, in such a state that the respective pad portions are cut to be removed from the distal edge of the cylindrical portion, whereby the fourth intermediate material is made into a fifth intermediate material, the cylindrical portion is made to disappear at the portions which are exposed between the respective tongue pieces. Then, portions with which axial end faces of the respective needles are brought into abutment are made to be situated on the same plane as an internal surface of the circular ring portion.
By configuring the cage in this way, the axial end faces of the respective needles can be displaced as far as the position of the internal surface of the circular ring portion. In other words, the interposition of residual spaces between the axial end faces of the respective needles and the internal surface of the circular ring portion can be prevented, and an axial dimension of the radial needle bearing can be reduced, thereby making it possible to realize reductions in size and weight.

In addition, as is set forth in a sixteenth aspect of the invention, in the event that a manufacturing method for a cage for radial needle bearing of the invention, firstly, by performing a punching process on a metal plate, a circular ring portion which is to make up a rim portion and a plurality of tongue pieces which extend radially from an outer circumferential edge of the circular ring portion are formed. Thereafter, by bending these respective tongue pieces at right angles to the circular ring portion, straight-line pillar intermediate elements which are parallel to each other are made. Following this, a distal end portion of an inner diameter side receiving die on an outer circumferential surface on which convex portions and concaved portions are disposed alternately at equal pitches to the respective pillar intermediate elements to be worked is inserted into an inside of a inner half portion of these respective pillar intermediate elements in such a state that phases of the respective convex portions and phases of the respective pillar intermediate elements are made to coincide with each other with respect to a circumferential direction of the circular ring portion, and thereafter, outer circumferential surfaces of the respective pillar intermediate elements are pressed against an outer circumferential surface of the inner diameter side receiving die by an inner circumferential surface of a die. Then, these respective pillar intermediate elements are made into respective second pillar intermediate elements in which a proximal end portion which resides in a portion which substantially match the outer circumferential edge of the circular ring portion with respect to a radial direction of the circular ring portion is made to continue to an intermediate portion to a distal end portion which reside closer to an inner diameter side than the proximal end portion with respect to the radial direction of the circular ring portion via a bend portion lying closer to a proximal end. Thereafter, the inner diameter side receiving die is rotated relative to the circular ring portion until the phases of the respective concaved portions and the phases of the respective second intermediate elements come to match each other with respect to the circumferential direction of the circular ring portion, and following this, the distal end portion of the inner diameter side receiving die is withdrawn from the inside of the respective second pillar intermediate elements.

In addition, more preferably, as is set forth in a seventeenth aspect of the invention, after the distal end portion of the inner diameter side receiving die is removed from the inside of the respective second pillar intermediate elements, an outer diameter side receiving die is disposed on the periphery of the respective second pillar intermediate elements, and a second inner diameter side receiving die is disposed in an inside of longitudinal end portions of the respective second pillar intermediate elements which lie closer to the circular ring portion. Of the receiving dies, the outer diameter side receiving die is such that convex portions and concaved portions are disposed on a portion of an axially intermediate portion on an inner circumferential surface thereof which faces outer circumferential surfaces of longitudinally intermediate portions of the second pillar intermediate elements. In addition, the second inner diameter side receiving die is such as to have a similar configuration to that of the distal end portion of the inner diameter side receiving die. A second die is forced into an inside of the other longitudinal end portions of the respective second pillar intermediate elements in such a state that the second inner diameter side receiving die and the outer diameter side receiving die are disposed in the predetermined positions as described above, so that the respective second pillar intermediate elements are held between the second die, the outer diameter side receiving die and the second inner diameter side receiving die. By this process, bend portions lying closer to the distal end which are bent in an opposite direction to the bend portions lying closer to the proximal end are formed between intermediate portions and distal end portions of the respective second pillar intermediate elements, whereby the respective second pillar intermediate elements are made into pillar element portions, and a cage element is made. Thereafter, the outer diameter side receiving die and the cage element are rotated relative to each other until the respective concaved portions on the inner circumferential surface of the outer diameter side receiving die and phases of the pillar element portions coincide with each other, so as to remove the outer diameter side receiving die from the periphery of the cage element. In addition, the second inner diameter side receiving die is rotated relative to the circular ring portion until phases of the respective concaved portions and the phases of the pillar element portions coincide with each other with respect to the circumferential direction of the circular ring portion, and following this, the second inner diameter side receiving die is withdrawn from the inside of the cage element.

### Advantage of the Invention

According to the cage for radial needle bearing, the manufacturing method for the same and the radial needle bearing of the invention which are configured as described above, the shape accuracy of the pair of rim portions and the respective pillar portions can be controlled without correcting process or the like, in particular, without performing any troublesome work. In addition, the facilitation of incorporation of the needles into the respective pockets and the prevention of dislocation of the needles once they are so incorporated can sufficiently be realized.

### Brief Description of the Drawings

Fig. 1 is a perspective view showing Embodiment 1 of the invention as in a state before a pair of cage elements are connected together;
Fig. 2 are plan views and sectional views which show a manufacturing method of the cage element in the order of steps;
Fig. 3 is a partial perspective view showing Embodiment 2 of the invention;
Fig. 4 is a partial perspective view showing Embodiment 3 of the same;
Fig. 5 is a partial perspective view showing Embodiment 4 of the same;
Fig. 6 is a view as seen in a direction indicated by an arrow A in Fig. 5;
Fig. 7 are plan views and sectional views which show, in the order of steps, a manufacturing method of a cage element of Embodiment 5 of the invention;
Fig. 8 are plan views and sectional views which show, in the order of steps, a manufacturing method of a cage element of Embodiment 6 of the same;
Fig. 9 are plan views and sectional views which show, in the order of steps, a first half of a manufacturing method of a cage element of Embodiment 7 of the same;
Fig. 10 are plan views and sectional views which show, in the order of steps, a latter half of the same;
Fig. 11 are part of the cage element that is manufactured by the manufacturing method of Embodiment 7 is shown, in which (a) and (b) are perspective views as seen from a radially inside and a radially outside of the cage element, respectively, and (c) is a sectional view taken along the line B-B of (a);
Fig. 12 is a sectional view showing Embodiment 10 of the invention;
Fig. 13 is a view as seen from the right of Fig. 12;
Fig. 14 is a perspective view showing the same as in a state before a cage element is joined to the other rim portion;
Fig. 15 are plan views and sectional views showing a machining method of the cage element in the order of steps;
Fig. 16 is a sectional view of a second intermediate material which shows Embodiment 11 of the invention;
Fig. 17 are sectional views showing, in the order of steps, a process for machining the second intermediate material into a third intermediate material;
Fig. 18 is a perspective view showing a configuration of a distal end portion of an inner diameter side receiving die;
Fig. 19 is a sectional view showing a process for machining the third intermediate material into a cage element;
Fig. 20 is a sectional view showing the other rim portion which is assembled to the cage element;
Fig. 21 is a sectional view showing a state in which the cage element and the other rim portion are assembled together;
Fig. 22 is a sectional view showing Embodiment 12 of the invention;
Fig. 23 is a view as seen from the right of Fig. 22;
Fig. 24 is a partial sectional view showing a state before a cage element and the other rim portion are assembled together;
Fig. 25 is a partial perspective view showing the same;
Fig. 26 is a sectional view showing Embodiment 13 of the invention;
Fig. 27 is a view as seen from the right of Fig. 26;
Fig. 28 is a partial sectional view showing a state before a cage element and the other rim portion are assembled together;
Fig. 29 is a partial perspective view showing the same;
Fig. 30 is a plan view and a sectional view which show a process for forming a stepped concaved portion at a distal end portion of a tongue piece;
Fig. 31 is a plan view and a sectional view which show a state of a trimming process for modifying the configuration and dimensions of the stepped concaved portion;
Fig. 32 is a perspective view showing a modified example of Embodiment 10 of the invention;
Fig. 33 is a partial sectional view showing an example of a conventionally known a rotational support device for a planetary gear;
Fig. 34 is a perspective view showing an example of a cage for radial needle bearing which is an object of the invention;
Fig. 35 is a sectional view taken along the line C-C in Fig. 34; and
Fig. 36 is a view of an intermediate material before it is formed into a cylindrical shape as seen from a side which will make up an outer circumferential surface of the intermediate material when it is formed into the cylindrical shape.

### Description of Reference Numerals

- 1: carrier;
- 2a, 2b: support plate;
- 3: support shaft;
- 4: planetary gear;
- 5: radial needle bearing;
- 6: needle;
- 7: cage;
- 8: inner ring raceway;
- 9: outer ring raceway;
- 10a, 10b: floating washer;
- 11: rim portion;
- 12: pillar portion;
- 13: pocket;
- 14: intermediate material;
- 15: locking projecting portion;
- 16: inner diameter side locking portion;
- 17, 17a, 17b, 17c, 17d, 17e, 17f, 17g, 125, 125a, 125b, 125c, 125d: pillar element portion;
- 18, 126: cage element;
- 19, 119a: material plate;
- 20, 120a: first intermediate material;
- 21, 121a: circular ring portion;
- 22, 122a: tongue piece;
- 23, 123a, 124a: second intermediate material;
- 24: concavely curved edge;
- 25: convexly curved edge;
- 26a, 26b: inclined edge;
- 27: engaging concaved portion;
- 28: engaging convex portion;
- 29: second intermediate material;
- 30: circular hole;
- 31: preparation hole portion;
- 32: first intermediate material;
- 35: material plate;
- 36: first intermediate material;
- 37: preparation hole;
- 38 rim: portion;
- 39: pad portion;
- 40: front half portion;
- 41: circular ring portion;
- 42: cylindrical portion;
- 43: second intermediate material;
- 44: third intermediate material;
- 45: tongue piece;
- 46: fourth intermediate material;
- 47: circular hole;
- 48: fifth intermediate material;
- 49a, 49b: elevated portion;
- 50a, 50b: inclined surface;
- 128: pillar intermediate element;
- 129: press machine;
- 130: pad;
- 131: inner diameter side receiving die;
- 132: die;
- 133: third intermediate material;
- 134: proximal end portion;
- 135: intermediate portion;
- 136: distal end portion;
- 137: bend portion lying closer to a proximal end;
- 138: second pillar intermediate element;
- 139: positioning convex portion;
- 140: base portion;
- 141: convex portion;
- 142: cylindrical portion;
- 143: center hole;
- 144: pushrod;
- 145: guide plate;
- 146: spring housing;
- 147: spring seat;
- 148: push spring;
- 150: gap portion;
- 151: outer diameter side receiving die;
- 152: second inner diameter side seat;
- 153: convex portion;
- 154: concaved portion;
- 155: second die;
- 156: bend portion lying closer to a distal end;
- 157, 157a: notch;
- 158: narrowed portion;
- 159: stepped concaved portion.

### Best Mode for Carrying out the Invention

### (Embodiment 1)

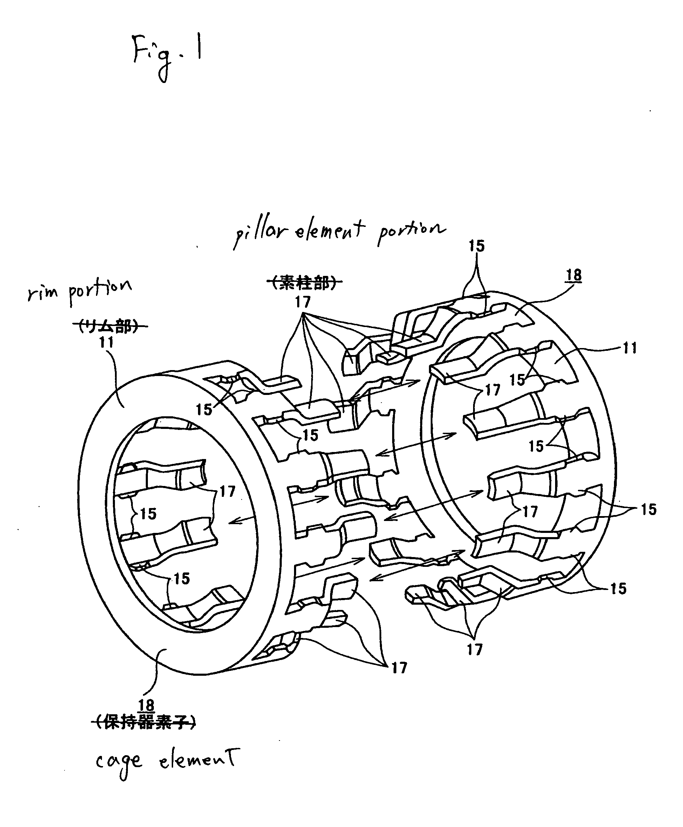

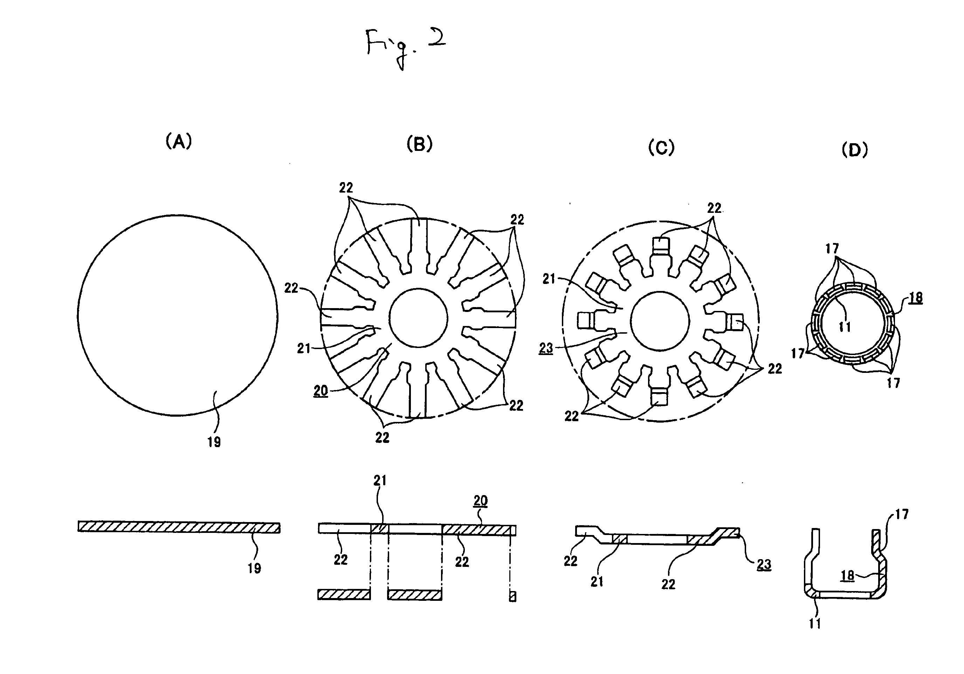

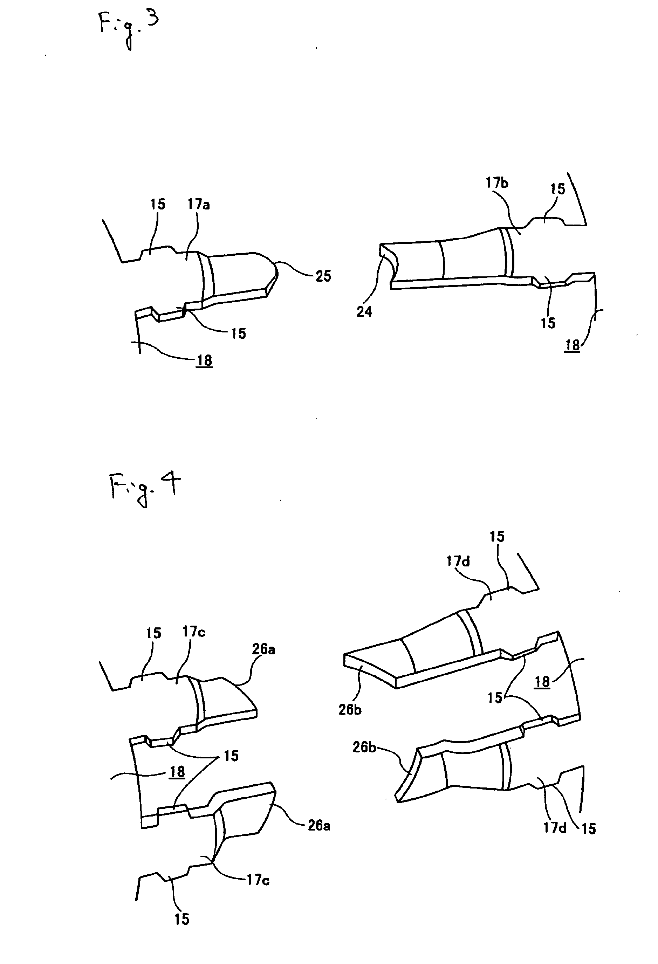

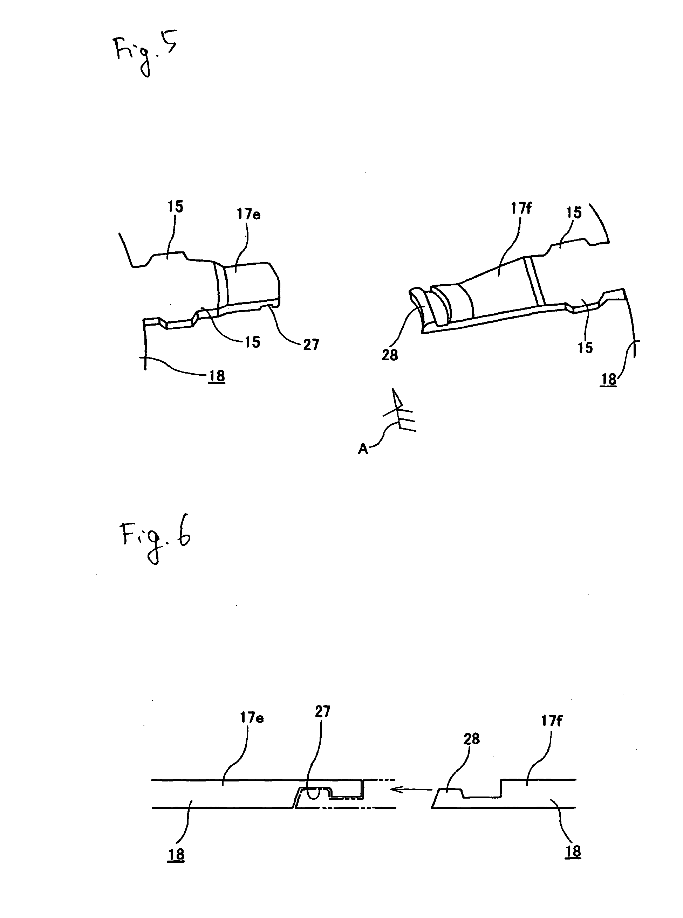

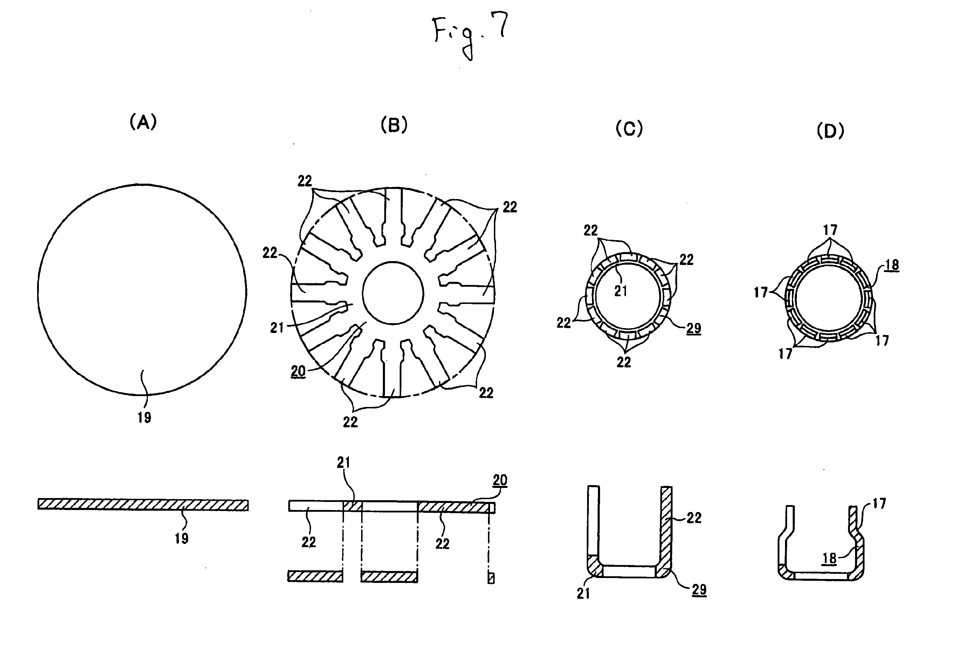

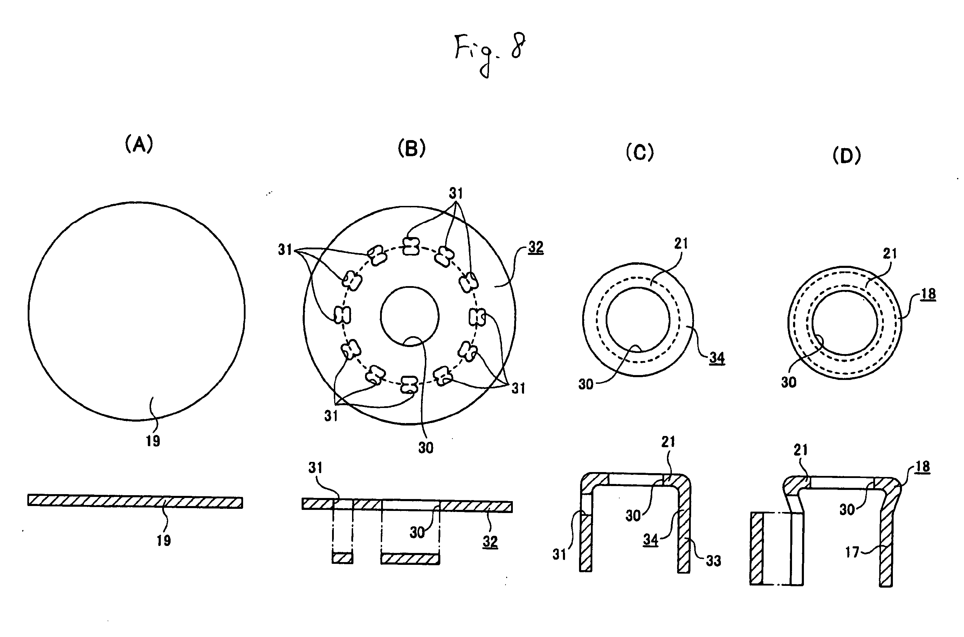

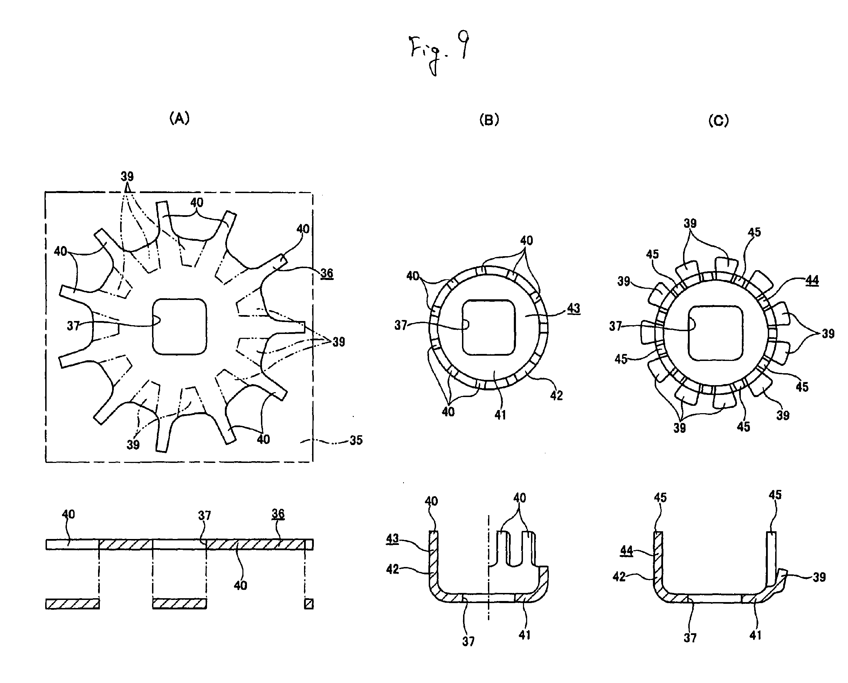

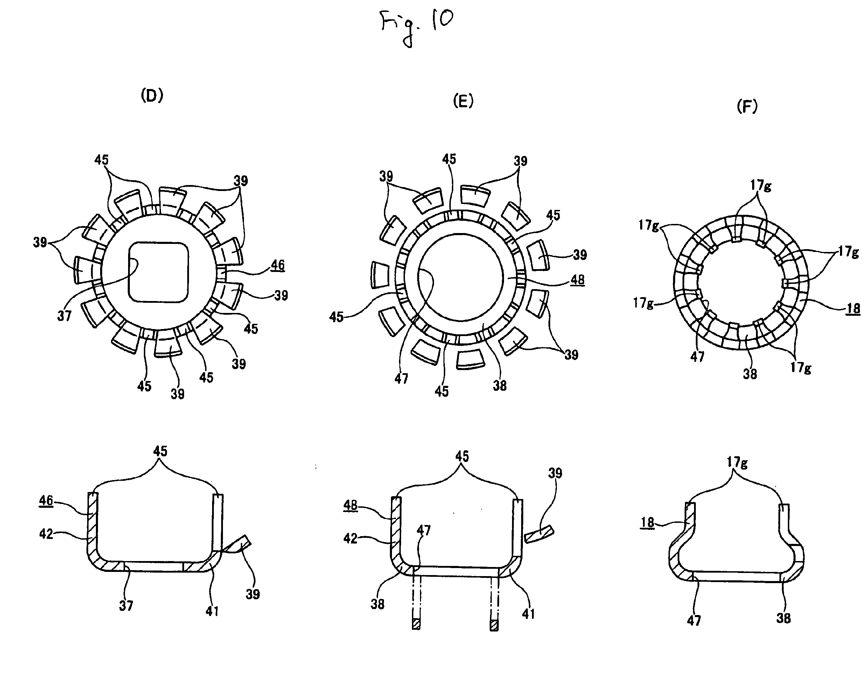

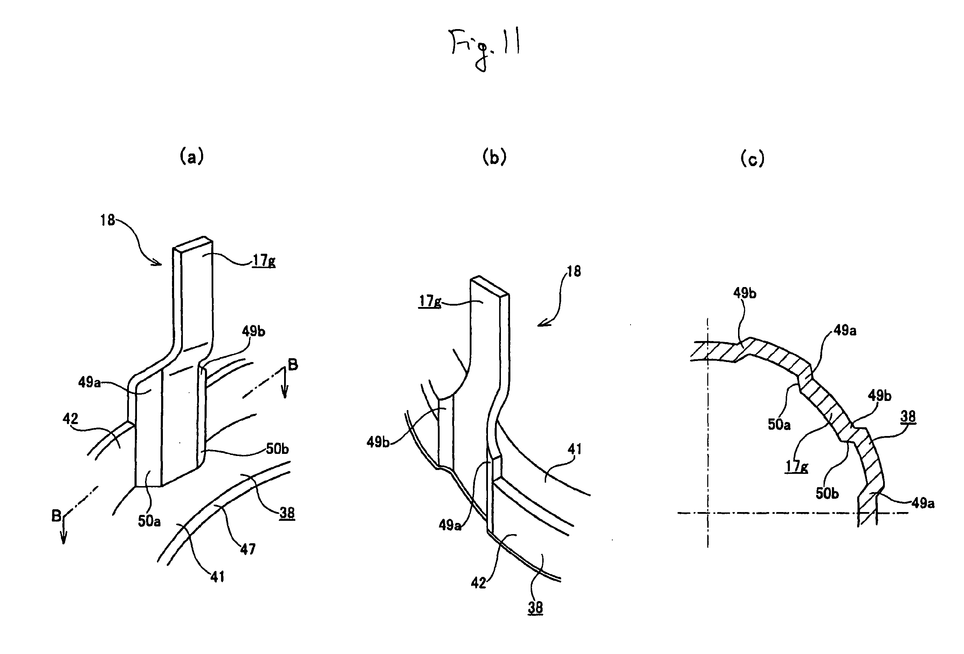

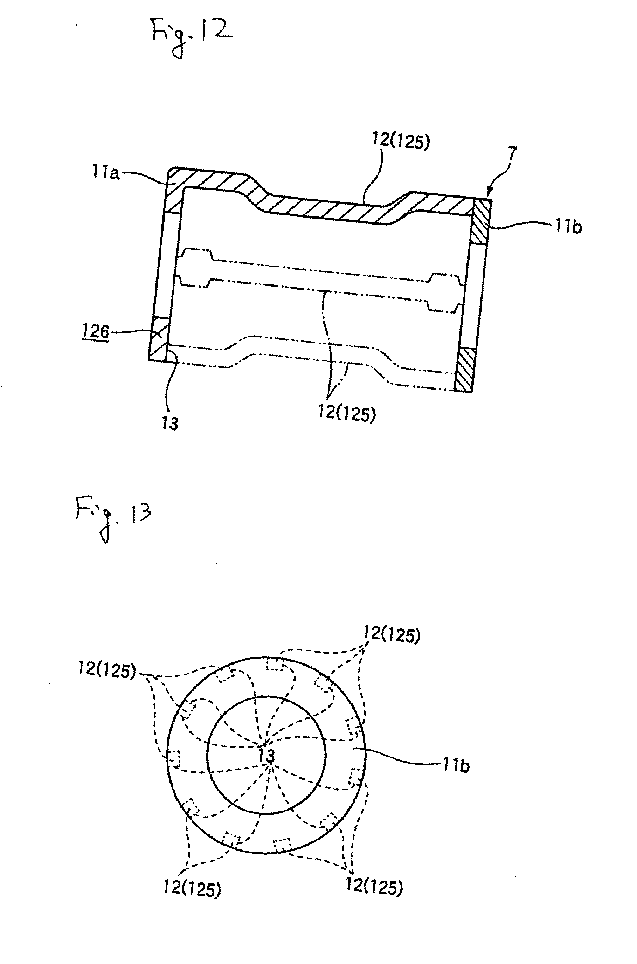

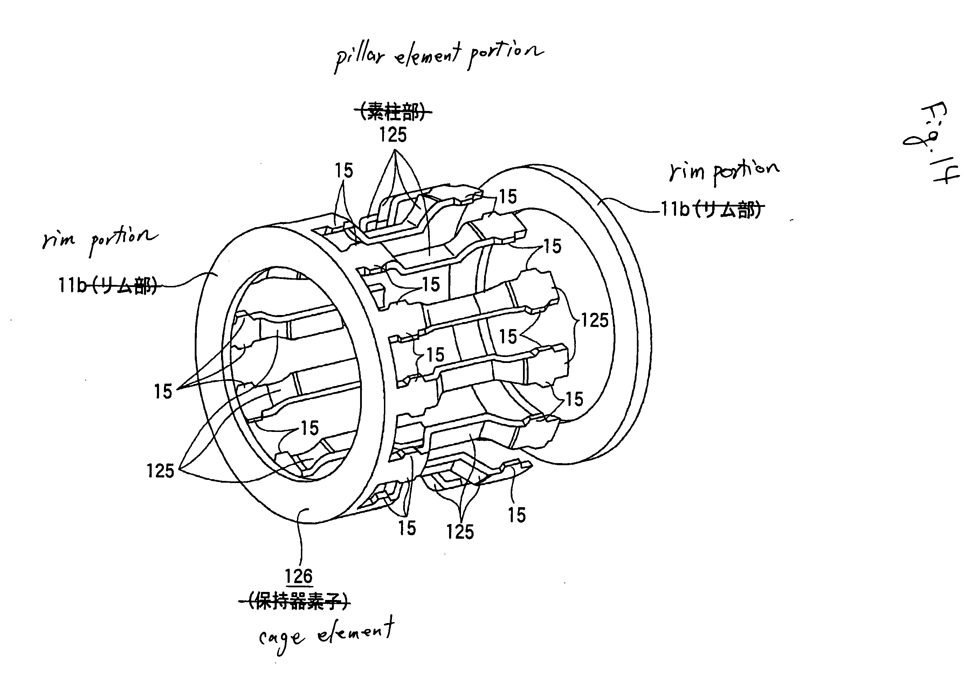

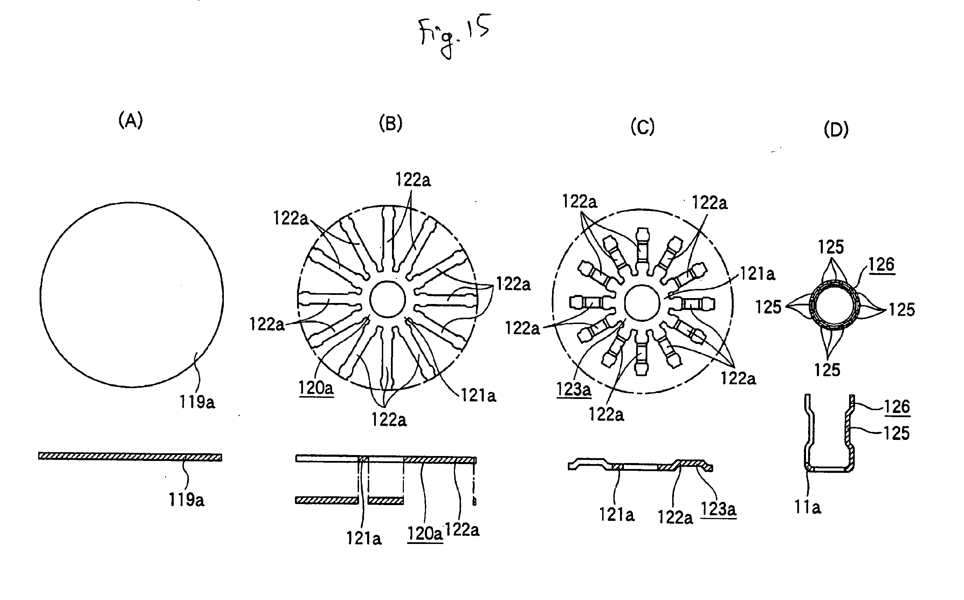

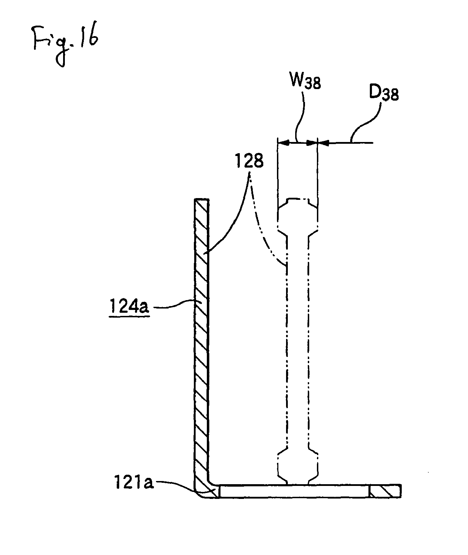

Figs. 1 to 2 show Embodiment 1 of the invention. A shape of a cage for radial needle bearing of this embodiment in a completed state becomes substantially similar to that of a conventional construction shown in Figs. 33 to 35 described above. A difference in shape in the completed state resides only in a sectional shape of respective pillar portions 12, 12 (refer to Figs. 33 to 35) with respect to an imaginary plane which intersects a center axis at right angles. A feature of this embodiment resides in a point that the respective pillar portions 12, 12 are configured by causing distal end edges of pairs of pillar element portions 17, 17 to butt each other and welding the butted portions. In addition, by adopting the configuration like this, not only the roundness of a pair of rim portions 11, 11 but also shape accuracy and dimension accuracy of respective portions are increased, and the sectional shape of the respective pillar portions 12, 12 with respect to the imaginary plane is formed into an arc shape.

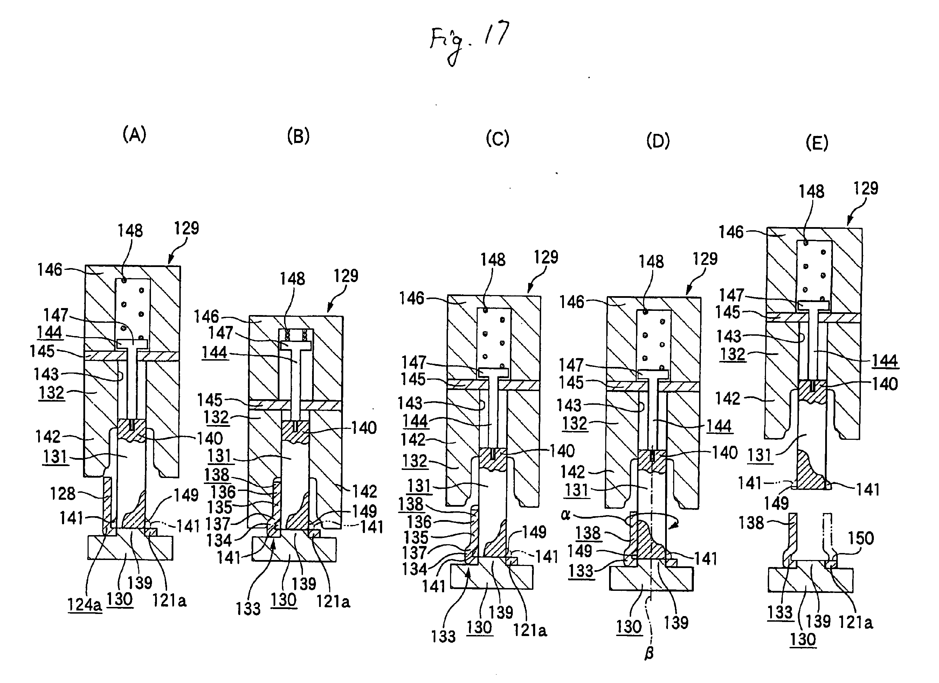

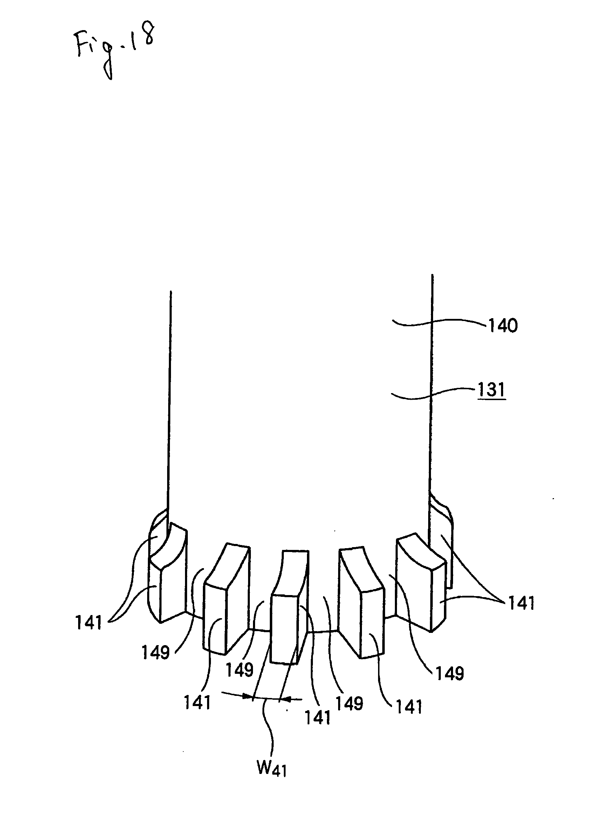

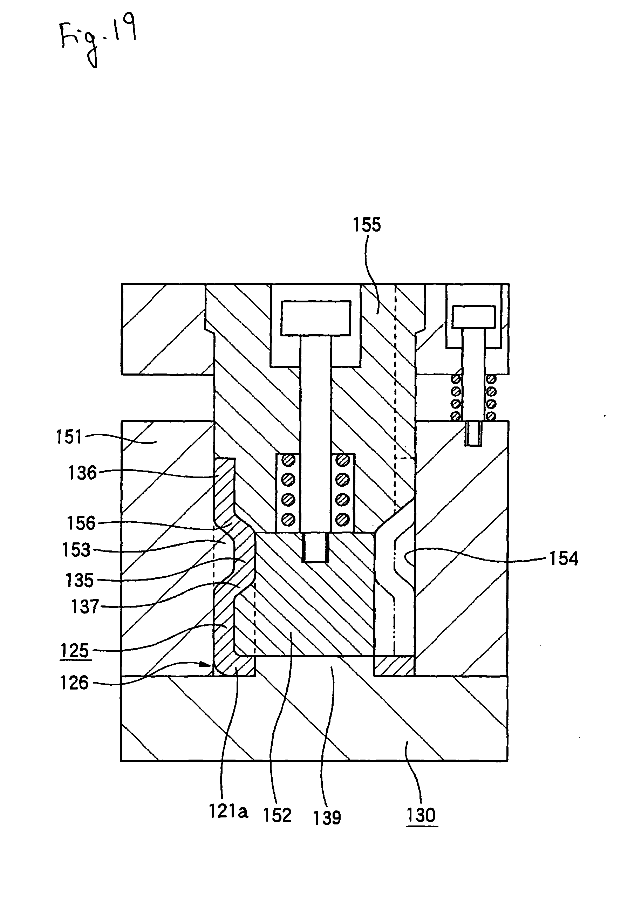

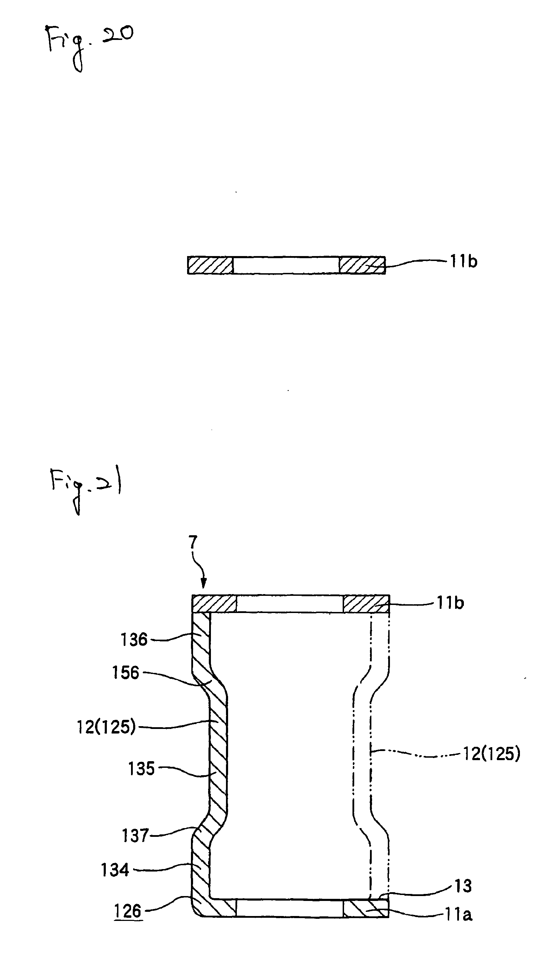

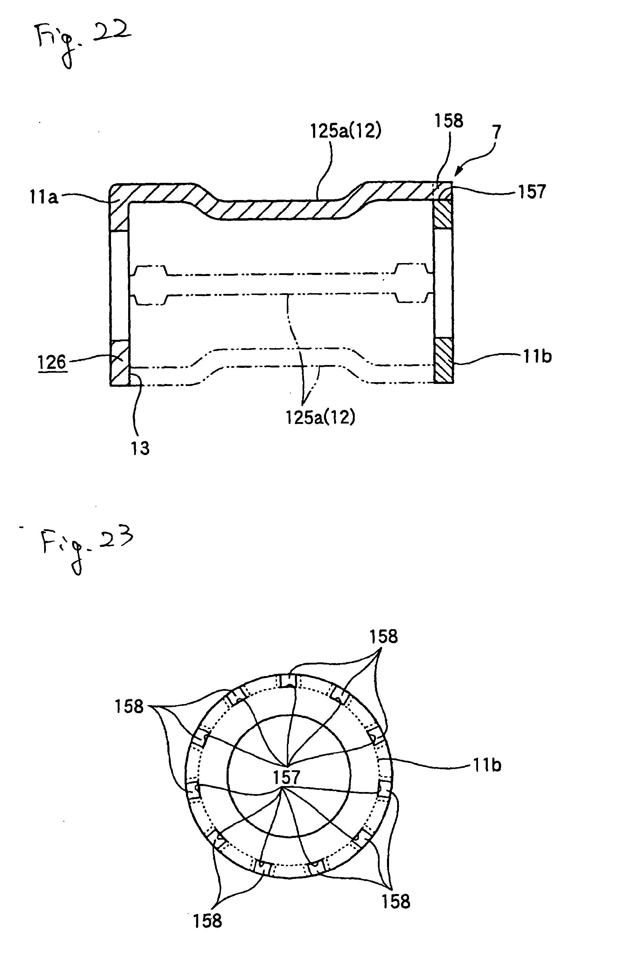

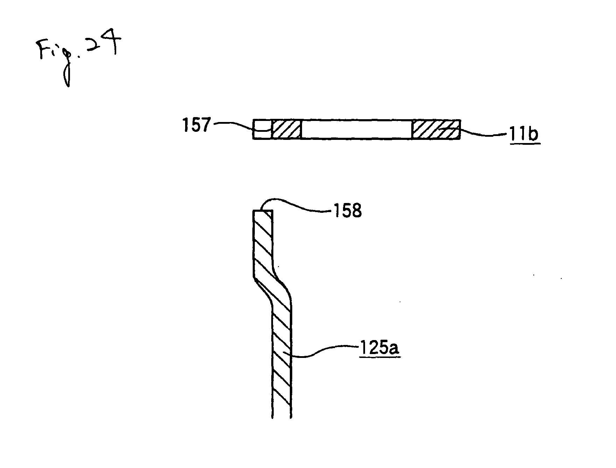

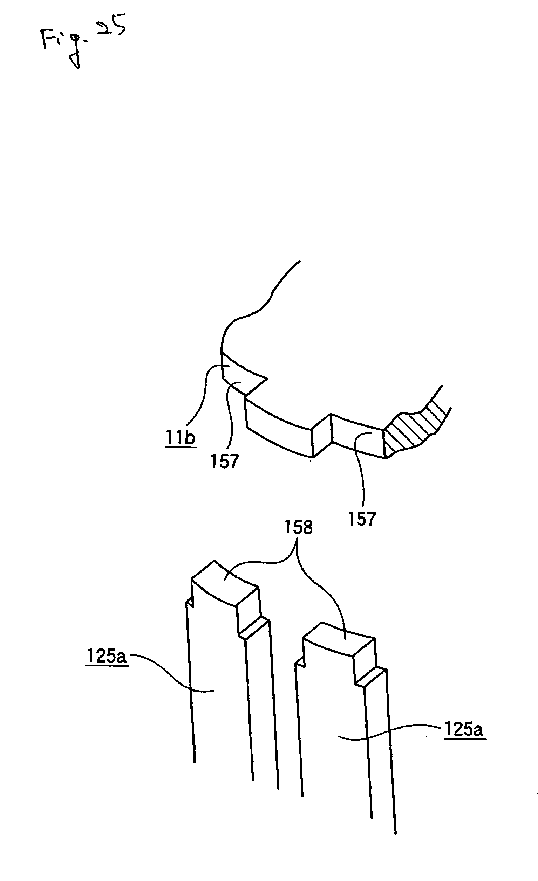

Because of this, in the case of this embodiment, a pair of cage elements 18, 18 are manufactured by performing a bending process and a punching process on a metal plate. The cage elements 18, 18 each include a circular ring-shaped rim portion 11 and the plurality of pillar element portions 17, 17 whose proximal end portions are made to continue, respectively, to the rim portion 11. In the case of this embodiment, the cage element 18 like this is manufactured in a way shown in Fig. 2. Note that in Fig. 2 above (and Figs. 7, 8 which will be described later), pitches with respect to a circumferential direction of the respective pillar element portions 17, 17 and tongue pieces 22, 22 which make up the respective pillar element portions 17, 17 are depicted shorter than in reality.

Initially, by performing a punching process on a steel plate or stainless steel plate which makes up a raw material, a circular material plate 19 as is shown in Fig. 2(A) is obtained.
Following this, by performing a punching process on part of the material plate 19, a first intermediate material 20 as shown in Fig. 2(B) is obtained. Namely, by punching out a central portion of the material plate 19 in a circular shape and punching out a portion from a radially intermediate portion to an outer circumferential edge portion in a notch-like fashion, a circular ring portion 21, which is to make up a rim portion, is formed in the central portion, and tongue pieces 22, 22, which are to make up the respective pillar element portions 17, 17, are formed so as to extend radially outwards from a plurality of locations lying along an outer circumferential edge of the circular ring portion 21 at equal intervals. Projecting portions, which are to make up locking projecting portions 15, 15 (refer to Figs. 13 to 35) when the respective pillar portions 12, 12 are built up, are formed on the respective tongue pieces 22, 22.

Next, by performing a step providing process as shown in Fig. 2(C) on the first intermediate material 20, the first intermediate material 20 is made into a second intermediate material 23. This second intermediate material 23 is such as to be formed by bending intermediate portions of the respective tongue pieces 22, 22 in a crank-like fashion on part of the first intermediate material 20. The process like this is performed in association with the fact that a sectional shape of a cage 7 which is a completed product is formed substantially into an M-shape as shown in Figs. 33 to 35. As this occurs, a pressing process is also performed on the respective tongue pieces 22, 22, so that a sectional shape of the respective tongue pieces 22, 22 is formed into an arc shape. The radius of curvature of this arc shape is controlled in such a way that in such a state that the respective pillar portions 12, 12 are built up from the respective tongue pieces 22, 22, the respective pillar portions 12, 12 reside within a single imaginary cylindrical space. In this way, the process for obtaining the second intermediate material 23 from the first intermediate material 20 can be performed easily and highly accurately by pressurizing the first intermediate material 20 between a pair of upper and lower dies between a pair of upper and lower dies set on a press machine.

Then, by performing a drawing and bending process as shown in Fig. 2(D) on the second intermediate material 23, the cage element 18 is made. This drawing and bending process is implemented by bending the circular ring portion 21 at a portion which lies closer to an outer diameter side thereof at right angles along the full circumference thereof together with the respective tongue pieces 22, 22 in an axial direction (upwards as viewed in the lower drawings in Fig. 2) of the circular ring portion 21 until the respective tongue pieces 22, 22 become parallel to each other. The second intermediate material 23 is made into the cage element 18 and the respective tongue pieces 22, 22 are made into the respective pillar element portions 17, 17 by the drawing and bending process like this.

In order to manufacture the cage of this embodiment, the pair of cage elements 18, which are each obtained in the way described above, are disposed in such a manner that rim portions 11, 11 thereof are disposed concentrically with each other, and phases in a circumferential direction of the pillar element portions 17, 17 thereof are made to coincide with each other. This process is performed in such a state that both the cage elements 18, 18 are gripped by a pair of gripping portions (fingers) which are provided on an assembling apparatus. Since both the gripping portions are provided concentric with each other and a phase with respect to a rotational direction is freely adjusted, the operation for disposing the rim portions 11, 11 of both the cage elements 18, 18 concentrically with each other and making the phases of the pillar element portions 17, 17 to coincide with each other can be implemented easily and highly accurately.

When both the cage elements 18, 18 have been disposed in the way described above, both the cage elements 18, 18 are caused to approach each other, so that distal end portions of the respective pillar element portions 17, 17 are caused to butt each other, and the butted portions are welded together, whereby both the cage elements 18, 18 are fixedly connected to each other. Because of this welding process, a groove (beveling) can be formed between distal end edges of the respective pillar element portions 17, 17. The respective pillar element portions 17, 17 whose distal end edges are butted and are then welded together then make up the respective pillar portions 12, 12. In addition, portions surrounded by the respective pillar portions 12, 12 which neighbor in the circumferential direction and both the rim portions 11, 11 become pockets 13, 13 (refer to Figs. 33 to 35), respectively.

Since there is a possibility that a minute elevation is formed at the butted and welded portions of the respective pillar element portions 17, 17, in order to make central portions of both side edges in the circumferential direction of the respective pillar portions 12, 12 completely smooth, a finishing process needs to be performed. However, in case a finishing process like this is performed, the production costs of the cage is increased, which is not preferable. On the other hand, both the side edges in the circumferential direction of the respective pillar portions 12, 12 do not have to be brought into engagement (contact) with rolling surfaces of needles 6, 6 which are held within the respective pockets 13, 13 along the full length thereof Then, it is preferable to prevent the butted and welded portions from being brought into contact with the rolling surface of the needles 6, 6 by narrowing the distal end portions of the respective pillar element portions 17, 17, compared with proximal end portions and intermediate portions thereof and performing the welding on outer circumferential surface sides of the respective pillar element portions 17, 17. By configuring the pillar element portions 17, 17 in this way, even though no finishing process is performed on the welded portions, the rolling surfaces of the respective needles 6, 6 can be prevented from being damaged as a result of rubbing of part of the rolling surfaces against the minute projecting portions existing at the butted and welded portions.

In the case of the cage for radial needle bearing of the embodiment which is configured and manufactured in the ways described above, the shape accuracy can easily be improved, and the performance of a radial needle bearing into which this cage is incorporated can be improved. The following (1) to (5) are reasons for this.
(1) Since the circular ring portions 21 of the cage elements 18, 18 which are to make up both the rim portions 11, 11 are produced by punching out the flat plate-like material plate 19, the roundness of the rim portions 11, 11 which are manufactured from the circular ring portions 21 can be improved.
(2) The process for bending the circular ring portion 21 at the portion of the radially intermediate portion which lies closer to the outer diameter side thereof at right angles along the full circumference thereof in order to produce the cage element 18 from the second intermediate material 23 can be performed with a large force by employing a press machine or the like. Because of this, both the rim portions 11, 11 can easily be formed into a correct circular shape, and the whole of the cage element 18 so obtained can be formed into an accurate circular shape, which is not a polygonal shape.
(3) Since the sectional shape of the respective pillar element portions 17, 17 which are to make up the respective pillar portions 12, 12 can be curved in advance, the sectional shape of these respective pillar portions 12, 12 can also be formed into the arc shape.
(4) The intervals between the pillar portions 12, 12 which neighbor in the circumferential direction can be made to match each other in a strict fashion, whereby the width dimensions of the pockets 13, 13 which are formed between the respective pillar portions 12, 12 can be made to match each other accurately.
(5) Since, even in the event that the sectional shape of the cage 7 is formed substantially into the M shape, the shapes of the respective pillar element portions 17, 17 are deformed in no case while the rim portion 11 is machined, the shapes of the respective pillar portions 12, 12 which are manufactured from the respective pillar element portions 17, 17 are deformed in no case.
   In the case of this embodiment, since the superior shape accuracy and dimension accuracy can be obtained from the reasons described under (1) to (5) above, irrespective of the fact that the cage can be manufactured at low costs, it is possible to prevent the occurrence of a case where the respective needles 6, 6 are made difficult to be incorporated into the respective pockets 13, 13, or the respective needles 6, 6 which are so incorporated are dislocated abruptly.

### (Embodiment 2)

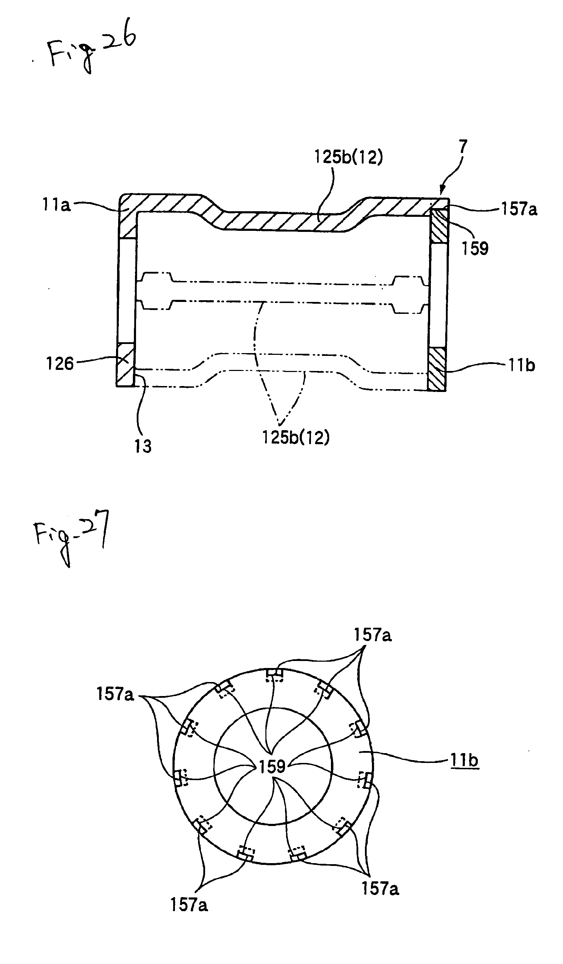

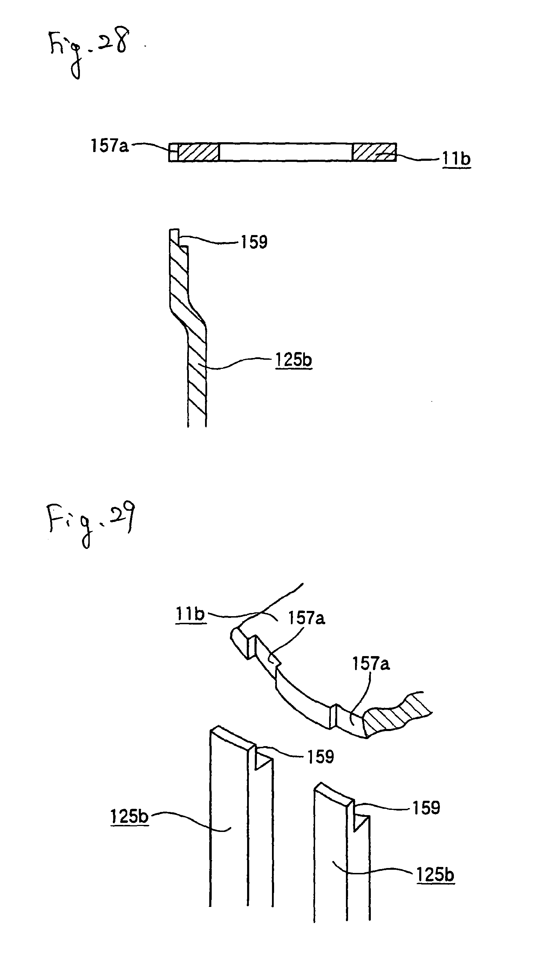

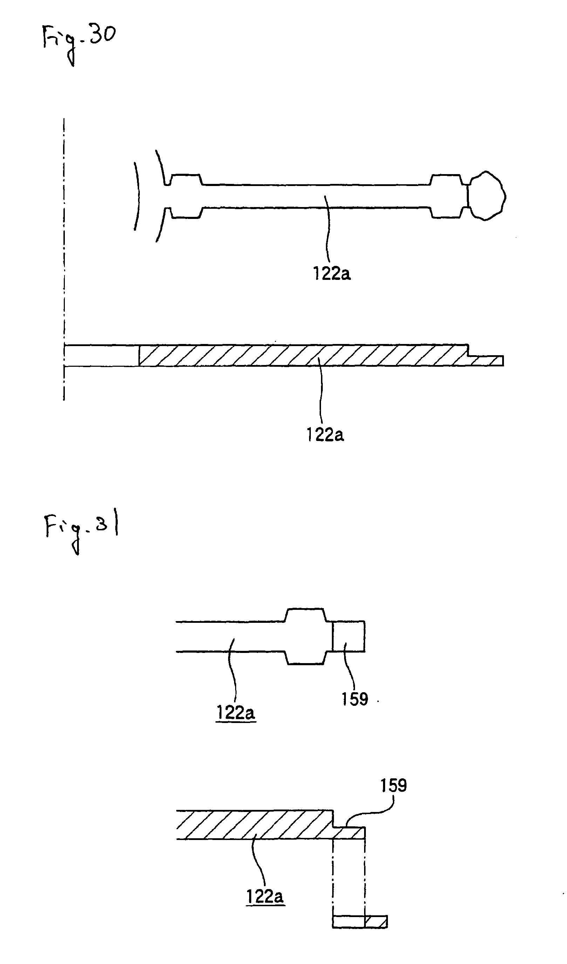

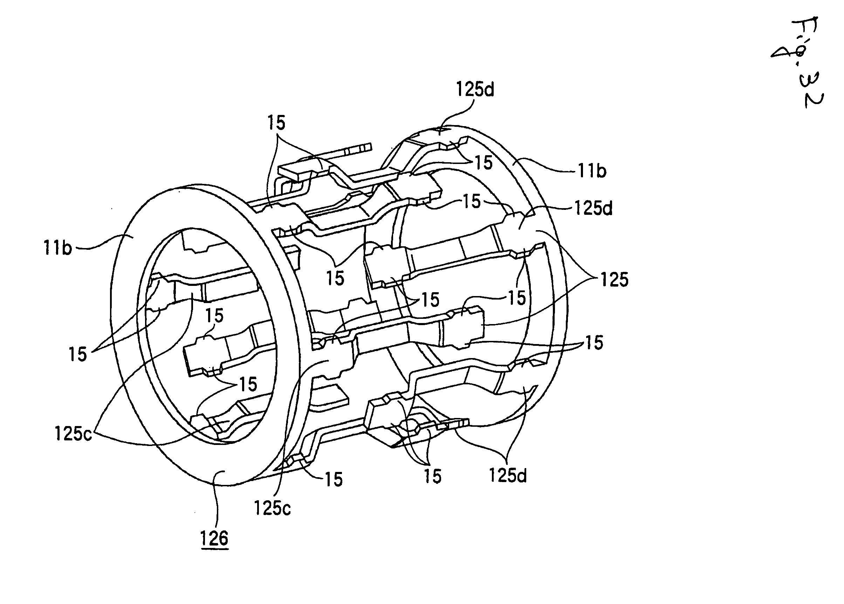

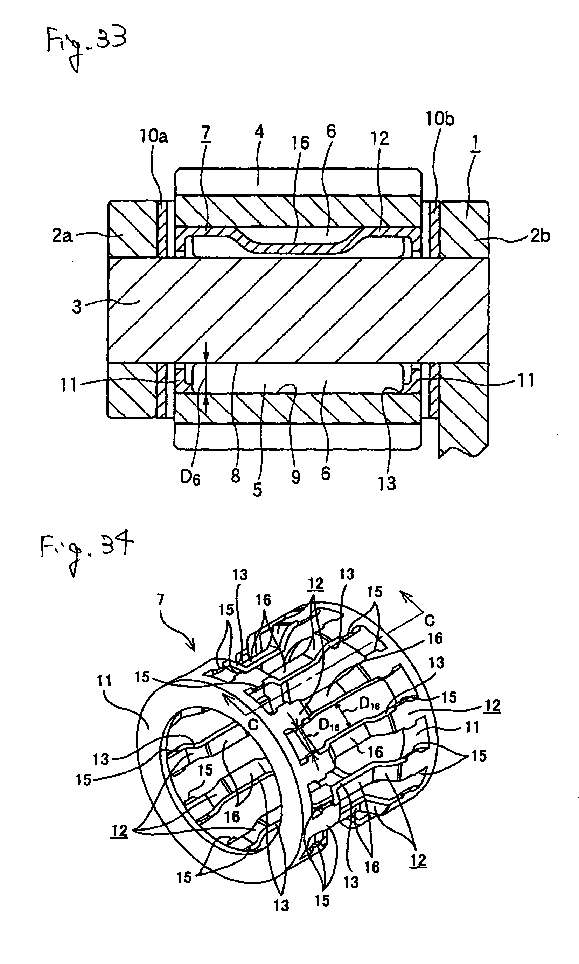

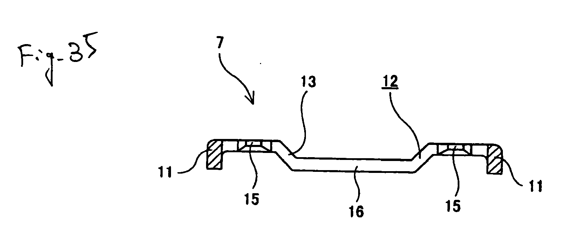

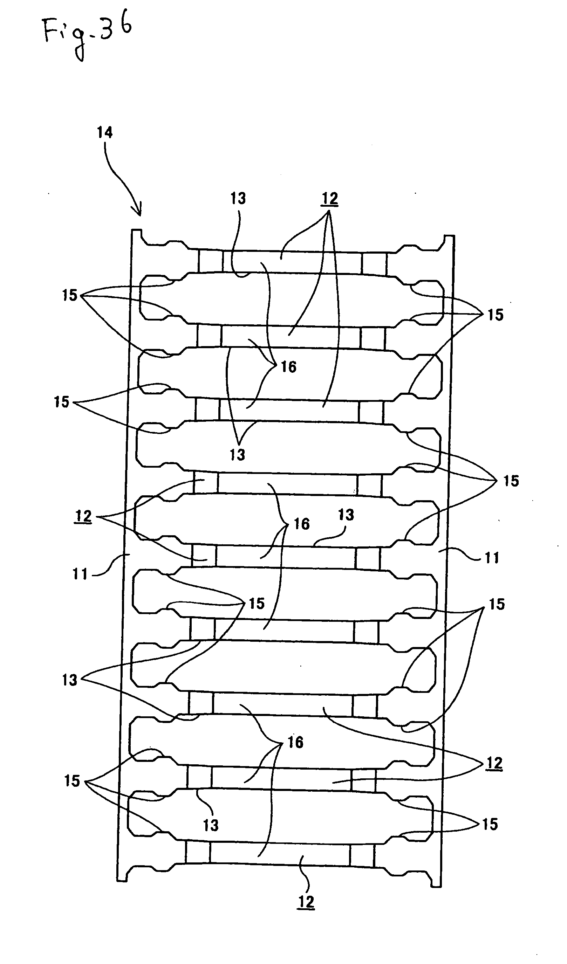

Fig. 3 shows Embodiment 2 of the invention. In the case of this embodiment, one of distal end edges of respective pillar element portions 17a, 17b whose end portions are connected to each other is made into a concavely curved edge 24, while the other is made into a convexly curved edge 25 which is brought into engagement with the concavely curved edge 24. Radii of curvature of both the concavely curved edge 24 and the convexly curved edge 25 are made the same as each other, so that both the curved edges 24, 25 are brought into close engagement with each other. In addition, with phases of the respective pillar element portions 17a, 17b with respect to a circumferential direction of rim portions 11, 11 (refer to Fig. 1) of a pair of cage elements 18, 18 made to match each other, the distal end edges of the respective pillar element portions 17a, 17b are caused to butt each other, and the butted portion of the respective pillar element portions 17a, 17b is made to be welded together.
In the case of this embodiment, by configuring the pillar element portions in the way described above, the phases of the respective pillar element portions 17a, 17b are made to match each other correctly, thereby making it possible to facilitate the obtaining of a cage with good quality. The other configurations and functions are similar to those of Embodiment 1 that has been described before.

### (Embodiment 3)

Fig. 4 shows Embodiment 3 of the invention. In the case of this embodiment, distal end edges of respective pillar element portions 17c, 17d which make up respective cage elements 18, 18 are made into inclined edges 26a, 26b which are inclined relative to a circumferential direction of rim portions 11, 11 (refer to Fig. 1), respectively. These respective inclined edges 26a, 26b are inclined alternately in opposite directions with respect to the circumferential direction of the rim portions 11, 11 and at the same angle. Then, by causing the distal end edges which are inclined in the same direction to butt each other, the butted portion of the distal end edges of the respective pillar element portions 17c, 17d is welded in such a state that phases of the respective pillar element portions 17c, 17d with respect to the circumferential direction made to match each other.
Also in the case of this embodiment, by configuring the pillar element portions 17c, 17d in the way described above, the phases of the respective pillar element portions 17c, 17d are made to match each other correctly, thereby making it possible to facilitate the obtaining a cage with good quality. The other configurations and functions are similar to those of Embodiment 1 which has been described before.

### (Embodiment 4)

Figs. 5 to 6 show Embodiment 4 of the invention. In the case of this embodiment, respective pillar element portions 17e, 17f which make up respective cage elements 18, 18, respectively, are connected together by bringing distal end portions of the respective pillar element portions 17e, 17f into convexo-concave engagement. Because of this, in the case of this embodiment, an engaging concaved portion 27 is formed on an inner circumferential surface of the distal end portion of the one pillar element portion 17e, and an engaging convex portion is formed on an outer circumferential surface of the distal end portion of the other pillar element portion 17f, respectively. The engaging concaved portion 27 and the engaging convex portion 28 are formed by plastically deforming part of a metal plate which makes up a raw material when forming the respective cage elements 18, 18 {for example, when manufacturing the second intermediate material 23 shown in Fig. 2(C)}.

The pair of cage elements 18, 18 which include the respective pillar element portions 17e, 17f in which the engaging concaved portion 27 or the engaging convex portion 28 is formed on the distal end portion thereof are connected to each other through convexo-concave engagement of the engaging concaved portion 27 with the engaging convex portion by being made to approach each other. The engaging concaved portion 27 and the engaging convex portion 28 are formed into an arc shape when viewed from a radial direction. Consequently, with the engaging concaved portion 27 and the engaging convex portion 28 brought into convexo-concave engagement with each other, the respective pillar element portions 17e, 17f are connected together in such a manner as not to be separated from each other in an axial direction, and at the same time, the respective pillar element portions 17e, 17f are prevented from slipping to move in the circumferential direction.
By adopting the configuration like this, in the event that the rotational speed in use is slow and a centrifugal force acting on the respective pillar element portions 17e, 17f is limited, welding the distal ends of the respective pillar element portions 17e, 17f can be omitted. The other configurations and functions are similar to those of Embodiment 1 which has been described before.

### (Embodiment 5)

Fig. 7 shows Embodiment 5 of the invention. This embodiment and Embodiments 6, 7, which will be described following this, relate to a manufacturing method for a cage element 18. As to the shape and construction of a cage element 18 to be manufactured and the connecting and fixing method of the cage element 18 so obtained, any of Embodiments 1 to 4 may be used.
Also in the case of this embodiment, firstly, by performing a punching process on part of a circular material plate 19 as shown in Fig. 7(A), a first intermediate material 20 as shown in (B) of the same figure is manufactured. Steps taken until this first intermediate material is manufactured are similar to those described in Embodiment 1.
In the case of this embodiment, by performing a drawing process on the first intermediate material 20, this first intermediate material 20 is formed into a shape in which the first intermediate material 20 is bent at right angles along the full circumference thereof at a portion on a radially intermediate portion thereof which lies closer to an inner diameter side thereof (a portion of a circular ring portion 21 which lies radially close to an outer diameter side thereof), whereby the first intermediate material 20 is made into a second intermediate material 29 as is shown in Fig. 7(C). Then, an undercut forming process is performed on this second intermediate material 29 for forming intermediate portions of respective tongue pieces 22, 22 into a crank-like bend so as to be made into pillar element portions 17, 17, whereby the second intermediate material 29 is made into a cage element 18 as is shown in Fig. 7(D).

### (Embodiment 6)

Fig. 8 shows Embodiment 6 of the invention. In the case of this embodiment, a circular hole 30 which makes up an inner diameter side of a portion which is to make up a rim portion and a plurality of preparation hole portions 31, 31 are formed by performing on part of a circular material plate 19 as is shown in Fig. 8(A) a punching process as is shown in (B) of the same figure, whereby a first intermediate material 32 is made.
Thereafter, by performing a drawing process on this first intermediate material 32, the first intermediate material 32 is bent at right angles along the full circumference thereof at a portion between the circular hole 30 and the preparation hole portions 31, 31, so as to form a cylindrical portion 33 whose proximal end portion is made to continue to the portion which is to make up a rim portion, whereby a second intermediate material 34 as is shown in Fig. 8(C) is made.
Following this, portions which are part of the cylindrical portion 33 and whose phases with respect to a circumferential direction coincide with the preparation hole portions 31, 31 are removed along a distal end edge of the cylindrical portion, and intermediate portions which lie between the portions which are removed with respect to the circumferential direction are bent into a crank shape, so as to form respective pillar element portions 17, 17, whereby a cage element 18 as is shown in Fig. 8(D) is made.

### (Embodiment 7)

Figs. 9 to 10 show Embodiment 7 of the invention. In the case of this embodiment, firstly, at a first step, by performing a punching process by a press on part of a material plate 35 indicated by chain lines in Fig. 9(A), a first intermediate material 36 indicated by solid lines in the same figure is manufactured. This first intermediate material 36 has a preparation hole 37 of a non-circular shape such as a square, a triangle, a segment and the like. The reason for forming the preparation hole 37 into the non-circular shape is that positioning (indexing) with respect to a rotational direction in the following step is facilitated. An inside diameter (an outside diameter of a circumscribed circle) of the preparation hole 37 is smaller than an inside diameter of a portion which is to make up a rim portion 38 (refer to Fig. 10(F)). In addition, pad portions 39, 39 {portions which are each surrounded on three sides by chain lines in Fig. 9(A)} which reside in the portion which is to make up a rim portion 38 and portions which are to make up spaces between proximal half portions (half portions lying on a rim portion 38 side) of respective pillar element portions 17g, 17g {refer to Fig. 10(F)} are provided in a radially intermediate portion of the first intermediate material 36. Furthermore, front half portions 40, 40 of tongue pieces, which are to make up front half portions (half portions which are opposite to the rim portion 38) of the respective pillar element portions 17g, 17g, are formed, respectively, at a plurality of locations in the circumferential direction of a radially outer end portion of the first intermediate material 36.

At a second step which is performed following the first step, the first radially material 36 is further formed by a drawing process or the like into a shape in which the radially central portion of the first intermediate material 36 is bent at right angles in one direction along the full circumference of a radially intermediate position. Then, by forming the relevant portion into an L-shape in cross section which is made up of a circular ring portion 41 and a cylindrical portion 42, a second intermediate material 43 as is shown in Fig. 9(B) is made. The front half portions 40, 40 of the respective tongue pieces become parallel to each other in such a state that the second intermediate member 43 is so made.

At a third step which is performed following the second step above, a tearing process for forcibly spreading the respective pad portions 39, 39 which are to reside between the proximal half portions of the respective pillar element portions 17g, 17g at part of the cylindrical portion 42 which is provided on the second intermediate material 43, so as to cut both end edge portions in the circumferential direction of the respective pad portions 39, 39 off both end edge portions in the circumferential direction of the proximal half portions of the respective pillar element portions 17g, 17g is performed. This tearing process is implemented by bringing an outer circumferential surface of the second intermediate material 43 into abutment with a die (a receiving die) having concaved portions which correspond to the respective pad portions 39, 39 and strongly pressing an inner circumferential surface of the same radially outwards by a punch (die) having convex portions which correspond to the respective pad portions 39, 39. Both the end edges in the circumferential direction of the pad portions 39, 39 and both the end edge portions in the circumferential direction of the proximal half portions of the respective pillar element portions 17g, 17g are torn (shorn) off each other, whereby a third intermediate material 44 as is shown in Fig. 9(C) is made. A plurality of tongue pieces 45, 45, parallel to each other, which are to make up the respective pillar element portions 17g, 17g are formed on the third intermediate material 44.

At a fourth step which is performed following the third step above, a plurality of pressurizing portions provided on, for example, a comb's teeth-like pressurizing jig are inserted between the tongue pieces 45, 45 provided on the third intermediate material 44. Then, portions between the respective tongue portions 45, 45 which neighbor in the circumferential direction at part of the cylindrical portion 42 are pressurized towards the circular ring portion 41 by the respective pressurizing portions. The respective pad portions 39, 39 are forcibly spread radially outwards by this pressurizing process. At the same time, a surface pressing process is performed on portions which are exposed between the respective tongue pieces 45, 45 at an end edge of the cylindrical portion 42, whereby a surface accuracy of the portions is increased. Furthermore, by pressurizing the cylindrical portion 42 in an axial direction towards the circular ring portion 41, the radius of curvature of a continuous portion between the cylindrical portion 42 and the circular ring portion 41 becomes small (the bend portion becomes angular), whereby a fourth intermediate material 46 as is shown in Fig. 10(D) is obtained.

At a fifth step which is performed following the fourth step above, the respective pad portions 39, 39 which still remain on an outer circumferential surface of the fourth intermediate material 46 are cut to be removed from a distal end edge of the cylindrical portion 42 by a trimming process. In addition, before or after (or at the same time as) this trimming process, a circular hole 47 which coincides with an inside diameter of the portion which is to make up a rim portion 38 is punched out in a central portion of the circular ring portion 41 by a piercing process or the like. A fifth intermediate material 48 as is shown in Fig. 10(E) is obtained in which a plurality of tongue pieces 45, 45 which are parallel to each other extend from the distal end edge of the cylindrical portion 42 which makes up a rim portion 38.

At a sixth step which is performed following the fifth step above, a bending process is performed on the respective tongue pieces 45, 45 of the fifth intermediate material 48, whereby the respective tongue pieces 45, 45 are made into the respective pillar element portions 17g, 17g. Namely, an undercut forming process is performed for forming intermediate portions of the respective tongue pieces 45, 45 into a shape in which the intermediate portions are bent in a crank shape, so as to make these respective tongue pieces 45, 45 into the respective pillar element portions 17g, 17g, whereby a cage element 18 as is shown in Fig. 10(F) is made. A pair of cage element 18 obtained in the way described heretofore are, as with the respective embodiments that have been described above, made into a cage for radial needle bearing by disposing rim portions 38 of the pair of cage element 18 concentrically with each other and connecting the distal end portions of the respective pillar element portions 17g, 17g to each other.

In particular, according to the manufacturing method of this embodiment, since surfaces of a cage obtained by assembling together the cage elements 18 which are brought into contact with rolling surfaces of axial end faces of needles are pressurized (surface pressed) by the pressurizing portions of the pressurizing jig at the fourth step, the properties of the surfaces can be improved. Because of this, damages such as harmful scratches are made difficult to be generated on the surfaces of the needles. In addition, since the radius of curvature of the continuous portion between the cylindrical portion 42 and the circular ring portion 41, which make up the rim portion 38 can be made small at the fourth step, an axial dimension of the cage can be suppressed to a small level. As a result of this, not only can an improvement in the performance (durability, low torque property) of a radial needle bearing in which the cage is incorporated be realized but also a reduction in size and weight of the same radial needle bearing can be realized.

### (Embodiment 8)

Fig. 11 shows Embodiment 8 of the invention. In the case of this embodiment, in the process of carrying out Embodiment 7 that has been described above, elevated portions 49a, 49b are formed partially along the circumferential direction of the cylindrical portion 42 when the drawing process is performed on the flat plate-like first intermediate material 36 shown in Fig. 9(A) described before, so as to make the second intermediate material 43 shown in (B) of the same figure. In these elevated portions 49a, 49b, elevated portions 49a, 49b which are bent in opposite directions to each other make a pair, so that a distal end portion of each pillar element portion 17 is displaced radially inwards of a rim portion 38. Namely, the respective elevated portions 49a, 49b are formed substantially in a position where both circumferential side edges of the pillar element portion 17 are extended. Then, an outer circumferential surface of a portion which is part of an outer circumferential surface of the cylindrical portion 42 and where a proximal half portion of the pillar element portion 17 is extended is disposed further radially inwards to substantially an extent equal to the thickness of the cylindrical portion 42 than outer circumferential surfaces of the other portions of the cylindrical portion 42.

In the case of this embodiment, by the configuration like this, respective inclined surfaces 50a, 50b which are formed on an inner circumferential surface side of the cylindrical portion 42 by portions which neighbor the circular ring portion 41 of the rim portion 38 at both axial end portions of each pillar portion which is made up of the pillar element portion 17g, that is, the respective elevated portions 49a, 49b are made to lie close to (in sliding contact with) the rolling surface of each needle. Because of this, the postures of the respective needles are stabilized (prevented from skewing), so as to realize an increase in the performance of the radial needle bearing.

### (Embodiment 9)

In addition, although illustration is omitted, in the event that Embodiment 7 described above or Embodiment 8 described above is carried out, the cylindrical portion 42 can be made to disappear in portions which are exposed between the respective tongue pieces 45, 45 in such a state that the fifth intermediate material 48 shown in Fig. 10(E) is obtained. In the event that the cylindrical portion 42 is made to disappear in the portions, portions which are brought into abutment with the axial end faces of the respective needles in such a state that the cage elements are assembled into a cage are situated on the same plane as the inner circumferential surface of the circular ring portion 41. In addition, in order to make the cylindrical portion 42 to disappear in the aforesaid portions, the aforesaid portions are collapsed to be cut out when performing the surface pressing process on the portions exposed between the respective tongue pieces 45, 45 at the end edge of the cylindrical portion 42 of the third intermediate material 44 shown in Fig. 9(C), or the portions of the cylindrical portion 42 which lie between the tongue pieces are cut to be removed when cutting the respective pad portions 39, 39 from the fourth intermediate material 46 shown in Fig. 10(D) so as to make the fifth intermediate material 48 shown in Fig. 10(E).

In the event that the cage element is configured as has been described above, the axial end faces of the respective needles can be displaced as far as the position of the inner circumferential surface of the circular ring portion 41. In other words, interposition of residual spaces between the axial end faces of the respective needles and the internal surfaces of the circular ring portions 41, thereby making it possible to realize a reduction in size and weight of the radial needle bearing by a reduction in the axial dimension thereof

### (Embodiment 10)

Figs. 12 to 15 show Embodiment 10 of the invention. Note that a shape of a cage for radial needle bearing in a completed state is substantially the same as the conventional construction shown in Figs. 33 to 35 which has been described before. A difference in shape in the completed state resides only in a sectional shape of respective pillar portions 12, 12 with respect to an imaginary plane which intersects a center axis at right angles. A feature of this embodiment resides in a point that the respective pillar portions 12, 12 are configured by causing distal end edges of respective pillar element portions 125, 125 whose proximal end portions are made to continue to an outer circumferential edge portion one rim portion 11 a to butt a portion of the other rim portion 11b which lies closer to an outside diameter side of an axial side surface thereof and welding the butted portions. In addition, by adopting the configuration like this, not only the roundness of the pair of rim portions 11 a, 11b but also shape accuracy and dimension accuracy of respective portions are increased, and the sectional shape of the respective pillar portions 12, 12 with respect to the imaginary plane is formed into an arc shape.

Because of this, in the case of this embodiment, a cage element 126 which is made up of the one rim portion 11a and the respective pillar element portions 125, 125 and the other rim portion 11b are manufactured by performing a bending process and a punching process on a metal plate. Of them, the cage element 126 includes the rim portion 11a which is formed into a circular ring shape and the plurality of pillar element portions 125, 125 whose proximal end portions are made to continue to the rim portion 11a. In the case of this embodiment, the cage element 126 like this is manufactured in a way shown in Fig. 15. Firstly, a manufacturing method for this cage element 126 will be described. Note that in Fig. 15 above, pitches with respect to a circumferential direction of the respective pillar element portions 125, 125 and tongue pieces 122a, 122b which make up the respective pillar element portions 125, 125 are depicted shorter than in reality.

Initially, by performing a punching process on a steel plate or stainless steel plate which makes up a raw material, a circular material plate 119a as is shown in Fig. 15(A) is obtained.
Following this, by performing a punching process on part of the material plate 119a, a first intermediate material 120a as shown in Fig. 15(B) is obtained. Namely, by punching out a central portion of the material plate 119a in a circular shape and punching out a portion from a radially intermediate portion to an outer circumferential edge portion in a notch-like fashion, a circular ring portion 121a, which is to make up the one rim portion 11a, is formed in the central portion, and the tongue pieces 122a, 122a, which are to make up the respective pillar element portions 125, 125, are formed so as to extend radially outwards from a plurality of locations lying along an outer circumferential edge of the circular ring portion 121a at equal intervals. Projecting portions, which are to make up locking projecting portions 15, 15 (refer to Figs. 14, 34 and 35) when the respective pillar portions 12, 12 are built up, are formed on the respective tongue pieces 122a, 122a.

Next, by performing a step providing process as shown in Fig. 15(C) on the first intermediate material 120a, the first intermediate material 120a is made into a second intermediate material 123a. This second intermediate material 123a is such as to be formed by bending two locations on longitudinal intermediate portions of the respective tongue pieces 122a, 122a on part of the first intermediate material 120a in opposite directions to each other in a crank-like fashion. The process like this is performed in association with the fact that a sectional shape of a cage 7 which is a completed product is formed substantially into an M-shape as shown in Figs. 12, 33 to 35. As this occurs, a pressing process is also performed on the respective tongue pieces 122a, 122a, so that a sectional shape of the respective tongue pieces 122a, 122a in the width direction is formed into an arc shape. The radius of curvature of this arc shape is controlled in such a way that in such a state that the respective pillar portions 12, 12 are built up from the respective tongue pieces 122a, 122a, the respective pillar portions 12, 12 reside within a single imaginary cylindrical space. In this way, the process for obtaining the second intermediate material 123a from the first intermediate material 120a can be performed easily and highly accurately by pressurizing the first intermediate material 120a between a pair of upper and lower dies between a pair of upper and lower dies set on a press machine.

Then, by performing a drawing and bending process as shown in Fig. 15(D) on the second intermediate material 123a, the cage element 126 is made. This drawing and bending process is implemented by bending the circular ring portion 121 a at a portion which lies closer to an outer diameter side thereof at right angles along the full circumference thereof together with the respective tongue pieces 122a, 122a in an axial direction (upwards as viewed in the lower drawings in Fig. 15) of the circular ring portion 121 a until the respective tongue pieces 122a, 122a become substantially parallel to each other. The second intermediate material 123a is made into the cage element 126 and the respective tongue pieces 122a, 122a are made into the respective pillar element portions 125, 125 by the drawing and bending process like this.

In order to manufacture the cage of this embodiment, the cage 126 which is obtained in the way described above and the other rim portion 11b which is manufactured in a circular ring-like shape as is shown in Figs. 12 to 14 by performing a punching process on a separate metal plate are disposed in such a manner that the other rim portion 11b and the one rim portion 11a which makes up the cage element 126 are positioned concentrically with each other. Following this, distal end edges of the respective pillar element portions 125, 125 are caused to butt the axial side surface of the other rim portion 11b on a portion which lies closer to an outer diameter side thereof. Then, the butted portions are welded, so that the other rim portion 11b and the cage element 126 are joined and fixed to each other. The respective pillar element portions 125, 125 whose distal end portions are caused to butt the other rim portion 11b and are further welded are made into the respective pillar portions 12, 12. In addition, portions surrounded on four sides by the respective pillar portions 12, 12 which neighbor in the circumferential direction and both the rim portions 11a, 11b become pockets 13, 13 (refer to Figs. 12, 33 to 35), respectively.

In the case of the cage for radial needle bearing of the embodiment which is configured and manufactured in the ways described above, as with Embodiments 1 to 9 that have been described above, by the following reasons (1) to (5), the shape accuracy can easily be improved, and the performance of a radial needle bearing into which this cage is incorporated can be improved.
(1) Since not only the other rim portion 11b but also the circular rim portion 121a of the cage element 126 which is to make up the one rim portion 11a are manufactured by punching out the flat plate-like material plate 19, the roundness of not only the other rim portion 11b but also the one rim portion 11a which is manufactured from the circular ring portion 121a can be improved.
(2) The process for bending the circular ring portion 121a at the portion of the radially intermediate portion which lies closer to the outer diameter side thereof at right angles along the full circumference thereof in order to produce the cage element 126 from the second intermediate material 123a can be performed with a large force by employing a press machine or the like. Because of this, the one rim portion 11a manufactured from the circular ring portion 121 a can easily be formed into a correct circular shape, and the whole of the cage element 126 so obtained can be formed into an accurate circular shape, which is not a polygonal shape.
(3) Since the sectional shape of the respective pillar element portions 125, 125 which are to make up the respective pillar portions 12, 12 can be curved in advance, the sectional shape of these respective pillar portions 12, 12 can also be formed into the arc shape.
(4) The intervals between the pillar portions 12, 12 which neighbor in the circumferential direction can be made to match each other in a strict fashion, whereby the width dimensions of the pockets 13, 13 which are formed between the respective pillar portions 12, 12 can be made to match each other accurately.
(5) Since, even in the event that the sectional shape of the cage 7 is formed substantially into the M shape, the shapes of the respective pillar element portions 125, 125 are deformed in no case while the rim portion 11a is machined, the shapes of the respective pillar portions 12, 12 which are manufactured from the respective pillar element portions 125, 125 are deformed in no case.

Furthermore, in the case of this example, when compared with Embodiments 1 to 9 that have been described before, a further reduction in the production costs can be realized due to the following reasons.
Firstly, when the other rim portion 11b is assembled to the cage element 126, only the distal end edges of the respective pillar element portions 125, 125 are caused to butt the axial side face of the other rim portion 11b on the portion which lies closer to the outer diameter side thereof As with Embodiments 1 to 9 that have been described before, labor hours for butting the distal ends of the half pillar portions 17, 17 (refer to Fig. 1) which are thin and low in rigidity in a cantilever-like state resulting before the distal end portions thereof are joined together against each other accurately become unnecessary. Because of this, the positioning operation can easily be performed, this contributing to a reduction in production costs.
In addition, interference between convex portions generated in association with welding or the like which exist on the joint portions between the distal end portions of the respective pillar element portions 125, 125 and the other rim portion 11b and rolling surfaces of needles 6, 6 (refer to Fig. 33) which are held within the respective pockets 13, 13 does not have to be considered much. Namely, beveling portions whose outside diameters are reduced exist on outer circumferential edge portions of axial end portions of the respective needles 6, 6 which face the respective joint portions. Because of this, even though a slight (a protruding amount being slight) convex portions are formed on the respective joint portions, there occurs no case where the convex portions are brought into interference with the surfaces of the respective needles 6, 6. Consequently, the necessity is obviated of paying too much attention to avoiding the formation of convex portions on the respective joint portions, and the machining process of the respective joint portions is facilitated to such an extent, thereby making it possible to realize a reduction in costs.

### (Embodiment 11)

Figs. 16 to 21 show Embodiment 11. Note that a feature of this embodiment resides in a point that a method and apparatus for manufacturing a cage for radial needle bearing which enables with good accuracy the formation of undercuts for machining a second intermediate material 124a as is shown in Figs. 16 and 17(A) into a cage element 126 as is shown in Figs. 19, 21 are realized. Namely, the feature of the invention resides in a point that a pressing process for bending longitudinally intermediate portions of straight-line pillar intermediate elements 128, 128, parallel to each other, which make up the second intermediate material 124a in a crank shape so as to make the pillar intermediate elements 128, 128 into respective pillar element portions 125, 125 is performed while supporting inner circumferential surfaces and outer circumferential surfaces of the respective pillar intermediate elements 128, 128 by a receiving die and that the receiving die can be made to be separated from the cage element 126 after the pressing process has been completed. Since the other points are similar to those of Embodiment 10 of the invention, the illustration and description of similar portions being omitted or simplified, characteristic portions of this embodiment will mainly be described.

The second intermediate material 124a is such as to be manufactured from a metal plate such as a steel plate or a stainless steel plate and has a circular ring portion 121a which is to make up one rim portion and the respective pillar intermediate elements 128, 128 which are bent from an outer circumferential edge of the circular ring portion 121a at right angles to the circular ring portion 121a. A sectional shape with respect to a width direction of these respective pillar intermediate elements 128, 128 is an arc shape, and a shape thereof with respect to an axial direction (a longitudinal direction) is a straight-line shape, allowing them to be parallel to each other. The second intermediate material 124a like this is firstly placed (set) on an upper surface of a pad 130 which makes up a press machine 129 shown in Fig. 17. In addition to the pad 130, this press machine 129 includes an inner diameter side receiving die 131 and a die 132. Then, by pressurizing the respective pillar intermediate elements 128, 128 between an outer circumferential surface of the inner diameter side receiving die 131 and an inner circumferential surface of the die 132, the longitudinally intermediate portions of the respective pillar intermediate elements 128, 128 are bent, whereby the second intermediate material 124a is made into a third intermediate material 133 shown in (B) to (E) of Fig. 17. Namely, a process is performed for making the respective pillar intermediate elements 128, 128 into respective second pillar intermediate elements 138 in which a proximal end portion 134 which resides in a portion which substantially coincides with the outer circumferential edge of the circular ring portion 121a with respect to a radial direction of the circular ring portion 121a is made to continue to an intermediate portion 135 which resides in a portion which lies further inwards than the proximal end portion 134 similarly with respect to the radial direction of the circular ring portion 121a and a distal end portion 136.

A positioning convex portion 139 on which the circular ring portion 121a can be fitted without any looseness is formed on the upper surface of the pad 130. Then, the circular ring portion 121a is fitted on the positioning convex portion 139, and the second intermediate material 124a is set on the press machine 129 in a normal positional relationship in such a state that an axial side surface of the circular ring portion 121a is brought into abutment with the upper surface of the pad 130. When the second intermediate material 124a is set on the press machine 129 in this way, as is shown in (A) of Fig. 17, a distal end portion of the inner diameter side receiving die 131 is inserted into an inside of the second intermediate material 124a. Note that a height dimension of the positioning convex portion 139 is made to be equal to or less (preferably, less) than a thickness dimension of the circular ring portion 121a. Consequently, there occurs no case where an upper surface of the circular ring portion 121 a is positioned lower than an upper surface of the positioning convex portion 139.

The inner diameter side receiving die 131 includes a base portion 140 and a plurality of convex portions 141, 141. Of them, the base portion 140 is formed into a cylindrical shape and has an outer circumferential surface which is shaped to substantially match inner circumferential surfaces of the intermediate portion 135 to the distal end portion 136 of the respective second pillar intermediate elements 138, 138. Namely, the outer circumferential surface of the base portion 140 is made into a cylindrical surface having dimensions which can work the inner circumferential surfaces of the intermediate portion 135 to the distal end portion 136 of the respective second pillar intermediate elements 138, 138 into a desired shape in consideration of a spring back generated while the respective second pillar intermediate elements 138, 138 are worked. Specifically, an outside diameter of the base portion 140 is made to be slightly (by an amount equal to the spring back) smaller than a diameter of an inscribed circle of the intermediate portion 135 to the distal end portion 136 of the respective second pillar intermediate elements 138, 138 after completion.

In addition, the respective convex portions 141, 141 are fixedly provided (for example, molded integrally) on the outer circumferential surface of a distal end portion of the base portion 140 at the same pitch as the respective pillar intermediate elements 128, 128 and the respective second pillar intermediate elements 138, 138 with respect to a circumferential direction. In addition, a shape of an outer circumferential surface of the respective convex portions 141, 141 substantially matches shapes of inner circumferential surfaces of the proximal end portion 134 and a bend portion 137 of the respective second pillar intermediate elements 138, 138. Namely, the shape of the outer circumferential surface of the respective convex portions 141, 141 is made to be a shape which can work the inner circumferential surfaces of the proximal end portion 134 and the bend portion 137 of the respective second pillar intermediate elements 138, 138 in consideration of the spring back generated during working. Specifically, the shape of the outer circumferential surface of the respective convex portions 141, 141 is made to be slightly (by an amount equal to the spring back) smaller than the inner circumferential surfaces of the proximal end portion 134 and the bend portion 137 of the respective second pillar intermediate elements 138, 138 after working. In addition, a width W41 with respect to a circumferential direction of the respective convex portions 141, 141 (refer to Fig. 18) is made to be equal to or more than a width W38 (refer to Fig. 16) of the respective second pillar intermediate elements 138, 138 and equal to or less than a space D38 of the respective second pillar intermediate elements 138, 138 which neighbor in the circumferential direction (W38 ≤ W41 ≤ D38). The distal end portion of the inner diameter side receiving die 131 on which the convex portions 141, 141 like this is inserted into the inside of the second intermediate material 124a in such a state that phases of the respective convex portions 141, 141 are made to coincide with phases of the respective pillar intermediate elements 128, 128.

When the distal end portion of the inner diameter side receiving die 131 has been inserted into the inside of the second intermediate material 124a in this way, thereafter, as is shown in (B) of Fig. 17, outer circumferential surfaces of the respective pillar intermediate elements 128, 128 are pressed against the outer circumferential surface of the inner diameter side receiving die 131 by the inner circumferential surface of the die 132. A lower end portion of the die 132 which is fixed to a ram, not shown, of the press machine so as to be lifted up and down is made to be a cylindrical portion 142 for working the pillar intermediate elements 128, 128 of the second intermediate material 124a into the respective second pillar intermediate elements 138, 138. Then, a shape of an inner circumferential surface of this cylindrical portion 142 is formed into a shape which substantially coincides with the outer circumferential surfaces of the second pillar intermediate elements 138, 138. Specifically, the shape of the inner circumferential surface of the cylindrical portion 142 is formed into a shape of stepped cylindrical surface which is slightly (by the amount equal to the spring back) smaller than the shapes of outer circumferential surfaces of the proximal end portion 134 and the bend portion 137 of the respective second pillar intermediate elements 138, 138 which result after completion.

In addition, the inner diameter side receiving die 131 is supported in such a state that it can be lifted up and down and is given a downward elastic. Namely, the base portion 140 of the inner diameter side receiving die 131 is fitted in a center hole 143 formed in an upper half portion of the die 132 with no looseness provided and so as to be lifted up and down. In addition, by providing a rotation preventive mechanism (whose illustration is omitted) such as a key engagement between an inner circumferential surface of the center hole 143 and the outer circumferential surface of the base portion 140, through rotation of the die 132 through a predetermined angle, the inner diameter side receiving die 131 is also made to be rotated by the same angle (or the inner diameter side receiving die 131 is made not to rotate relative to the die 132). In addition, a pushrod 144 whose lower end portion is fixedly connected to an upper end face of the inner diameter side receiving die 131 is passed through a guide plate 145 which is fixed to an upper end portion of the die 132 so as to be lifted up and down freely. Furthermore, a pressurizing spring 148 such as a compression coil spring is provided between a deeper end face (a lower surface) of a spring housing 146 which is fixed on to a top of the guide plate 145 and a spring seat 147 which is fixedly provided on an upper end portion of the pushrod 144, so as to give a downward elastic force to the inner diameter side receiving die 131.

In a state in which the die 132 is pressurized downwards by the ram so as to press the outer circumferential surfaces of the respective pillar intermediate elements 128, 128 against the outer circumferential surface of the inner diameter side receiving die 131 by the inner circumferential surface f the die 132, as is shown in (B) of Fig. 17, the inner diameter side receiving die 131 rises relative to the die 132 while compressing elastically the pressurizing spring 148 (in reality, the inner diameter side receiving die 131 stops in its original position, while only the die 132 lowers). Consequently, a distal end face (one face) of this inner diameter side receiving die 131 presses to hold firmly the circular ring portion 121a fitted on the positioning convex portion 139 towards the upper surface of the pad 130, so as to prevent an abrupt movement of the second intermediate material 124a which includes this circular ring portion 121a. The cylindrical portion 142, which is provided on a lower half portion of the die 132, lowers towards the periphery of the second intermediate material 124a as is shown in (B) of Fig. 17, with the second intermediate material 124a pressed to be held on to the upper surface of the pad 130.

Then, the respective pillar intermediate elements 128, 128 are pressed against the outer circumferential surface of the inner diameter side receiving die 131 by the inner circumferential surface of the cylindrical portion 142, so as to work these respective pillar intermediate elements 128, 128 into the respective second pillar intermediate elements 138, 138, whereby the second intermediate material 124a is made into the third intermediate material 133. Specifically, these respective second pillar elements 138, 138 are each formed into a crank shape in cross section in which the proximal end portion 134 which resides in the portion which substantially coincides with the outer circumferential edge of the circular ring portion 121 a with respect to the radial direction of the circular ring portion 121a is made to continue to the intermediate portion 135 which resides further inwards than the proximal end portion 134 similarly with respect to the radial direction of the circular ring portion 121a and the distal end portion 136 via the bend portion 137, whereby the third intermediate material 133 is made. In this state, the phases of the convex portions 141, 141, which are formed on the outer circumferential surface of the distal end portion (the lower end portion) of the inner diameter side receiving die 131 coincide with the phases of the respective second pillar elements 138, 138.

Next, the ram, which has lowered, is caused to rise, so that the die 132 fixed to the lower end portion of this ram is caused to rise halfway up as is shown in (C) of Fig. 17. Specifically, the die 132 is caused to rise to such an extent that while a lower end edge of the die 132 lies upper than upper end edges of the respective second pillar intermediate elements 138, 138, there still remains a gap between the upper surface of the guide plate 145 and the lower surface of the spring seat 147 and is temporarily stopped.

As is shown by an arrow α in (D) of Fig. 17, the inner diameter side receiving die 131 is rotated by a predetermined angle about its center axis β which resides in a vertical direction from this state. Note that since it is difficult to rotate only the inner diameter side receiving die 131, in the case of the this embodiment, it is understood that the inner diameter side receiving die 131 is rotated by the predetermined angle by rotating the die 132 by the predetermined angle. This predetermined angle is made to be one half of the pitch of the respective second pillar intermediate elements 138, 138 (= one half of the pitch of the respective convex portions 141, 141). Consequently, the phases of the respective convex portions 141, 141 and the phases of the respective second pillar intermediate elements 138, 138, which have coincided with each other with respect to the circumferential direction of the circular ring portion 121a, are deviated from each other by one half of the pitch. In other words, phases of concaved portions 149, 149 which reside between the respective convex portions 141, 141 coincide with the phases of the respective second pillar intermediate elements 138, 138. Speaking reversely, the phases of the convex portions 141, 141 coincide with phases of respective gap portions 150 lying between the respective pillar intermediate elements 138, 138 which make up the pockets. Note that the processes for making the phases of the respective portions to coincide with each other in the ways described above may also be implemented by rotating the pad 130 through an angle equal to the predetermined angle with the die 132 left stationary.

In addition, a construction is provided in which when the inner diameter side receiving die 131 is rotated, a rotation of the third intermediate material 133 is prevented from being entrained. Although the provision of the construction like this is arbitrary, for example, a construction can be considered in which part of the outer circumferential surface of the third intermediate material 133 and part of the inner circumferential surface of the die 132 are brought into convexo-concave engagement, so as to prevent a relative rotation between the third intermediate material 133 and the die 132 (for example, in the event that the die 132 is not rotated, while only the inner diameter side receiving die 131 is rotated). Alternatively, a construction can also be adopted in which irregular engaging portions are provided between the third intermediate material 133 and the pad 130, and the rotation of the inner diameter side receiving die 131 is prevented (for example, the inner diameter side receiving die 131 is not rotated, while the pad 130 is rotated). In either of the cases, the inner diameter side receiving die 131 or the pad 130 is rotated through the predetermined angle by an appropriate oscillating mechanism such as an oscillating mechanism in which a cylinder- or ball screw-type actuator is combined with a crank arm in such a state that the rotation of the third intermediate material 133 is restricted.

In any case, when the phases of the respective concaved portions 149, 149 and the phases of the respective second pillar intermediate elements 138, 138 (the phases of the respective convex portion 141, 141 and the phases of the gap portions 150) coincide with each other in the way described above, as is shown in (E) of Fig. 17, the distal end portion of the inner diameter side receiving die 131 is removed from the inside of the third intermediate material 133, which was obtained as a result of the press process. This removing process is performed by raising the ram. As has been described above, since the width dimension of the respective second pillar intermediate elements 138, 138 is smaller than the width dimension of the respective gap portions 150 which are to make up pockets, there occurs no case where the respective second pillar intermediate elements 128, 128 are damaged (deformed) during the removing process.

When the third intermediate material 133 has been worked and the inner diameter side receiving die 131 and the die 132 have been removed, respectively, from the inside and the periphery of the third intermediate material 133 so worked in the ways that have been described above, following this, as is shown in Fig. 19, a second-stage undercut forming process for working the third intermediate material 133 into the cage element 126 is implemented. In this second-stage undercut forming process, after the distal end portion of the inner diameter side receiving die 131 has been removed from the inside of the third intermediate material 133, and the die 132 has been removed from the periphery of the third intermediate material 133, respectively, an outer diameter side receiving die 151 is disposed on the periphery of the third intermediate material 133, and a second inner diameter side receiving die 152 is disposed in an inside of an axial end portion of the third intermediate material 133 which lies closer to the circular ring portions 121a which is to make up a rim portion. In addition, when preparing for the second-state undercut forming process in this way, the third intermediate material 133 may be shifted on to another pad 130, or with the pad 130 left as it is (without shifting the third intermediate material 133 another pad 130), respective working dies, which are placed above the pad 130, may be switched. In addition, the operation for disposing the second inner diameter side receiving die 152 within an inside diameter of the third intermediate material 133 is performed in an opposite procedure to that of the removing process of the inner diameter side receiving die 131.

In the respective dies described above, the outer diameter side receiving die 151 is such as to be formed into a cylindrical shape as a whole, and convex portions 53 and convex portions 54 are disposed alternately at portions in an axially intermediate portion on an inner circumferential surface thereof which face the outer circumferential surfaces of longitudinally intermediate portions of the respective second pillar intermediate elements 138, 138 at the same pitch as that of the respective second pillar intermediate elements 138, 138. In addition, the second inner diameter side receiving die 152 is such as to have a similar construction to that of the distal end portion of the inner diameter side receiving die 131 and is supported below a second die 155 concentrically with the second die 155 so as to rise and lower relative to the second die 155 in such a state that it is given a downward elastic force and in such a state that its relative rotation with respect to the second die 155 is prevented. In addition, the outer diameter side receiving die 151 is also supported on the periphery of the second die 155 so as to rise and lower relative to the second die 155 in such a state that it is given a downward elastic force and in such a state that its relative rotation with respect to the second die 155 is prevented. Since the engagement state between the second die 155 and the second inner diameter side receiving tie 152 and the outer diameter side receiving die 151 is basically similar to the engagement state between the inner diameter side receiving die 131 and the die 132 and it is a construction obvious from Fig. 19, a detailed description thereof will be omitted.

When performing the second-stage undercut forming process, with the second inner diameter side receiving die 152 and the outer diameter side receiving die 151 disposed in predetermined positions shown in Fig. 19, the second die 155 is forced into an inside of the other longitudinal end portions of the respective second pillar intermediate elements 138, 138 which make up the third intermediate material 133. Then, these respective second pillar intermediate elements 138, 138 are held between the second die 155, the outer diameter side receiving die 151 and the second inner diameter side receiving die 152. By this process, a bend portion 156 which lies closer to the distal end is formed between the intermediate portion 135 and the distal end portion 136 of the respective second pillar intermediate elements 138, 138 so as to be bent in an opposite direction to the bend portion 137 which lies closer to the proximal end. As a result, the respective second pillar intermediate elements 138, 138 are worked into respective pillar element portions 125, 125, and the third intermediate material 133 is made into a cage element 126.

Thereafter, the pad 130 or the second die 155 is rotated through a predetermined angle, so that phases of the respective concaved portions 154 which reside on the inner circumferential surface of the outer diameter side receiving die 151 and phases of the respective pillar element portions 125, 125 are made to coincide with each other, whereby the second inner diameter side receiving die 152 is removed from the inside of the cage element 126. Also, as this occurs, the rotation of the cage element 126 that would be entrained by the rotation of the pad 130 or the second die 155 is prevented by an appropriate convexo-concave engagement. Thereafter, the cage element 126 is taken out from the upper surface of the pad 130, so as to be assembled with another rim portion 11b which has been manufactured separately as is shown in Fig. 21, and the cage element 126 and the rim portion 11b which are so assembled together are then joined to be fixed to each other by an appropriate means such as welding, brazing, bonding, clamping and the like, so as to be made into a cage 7.

In the case of this embodiment, the process for bending the intermediate portions of the respective pillar intermediate elements 128, 128 in the crank shape so as to be made into the respective pillar element portions 125, 125 is implemented after these respective pillar intermediate elements 128, 128 have been bent at right angles relative to the circular ring portion 121a. Because of this, there occurs no case where the bending process is performed on the respective pillar element portions 125, 125 after the intermediate portions of the respective pillar intermediate elements 128, 128 are bent in the crank shape. Namely, being different from the case of Embodiment 1 that has been described before, no bending process is performed after the bending process in the crank shape has been performed. Because of this, there occurs no case where the shapes of the respective pillar element portions 125, 125 are deformed in association with the bending process that would otherwise be performed.

Moreover, in the case of this embodiment, since the bending process of the bend portions 37 which lie closer to the proximal end is performed in such a state that the inner circumferential surfaces of the respective pillar intermediate elements 128, 128 are pressed to be held by part of the outer circumferential surface of the inner diameter side receiving die 131 and the bending process of the bend portions 156 which lie closer to the proximal end is performed in such a state that both the inner and outer circumferential surfaces of the portions of the respective second pillar intermediate elements 138, 138 which extend from the proximal end portion to the intermediate portion thereof are pressed to be held by part of the inner circumferential surface of the outer diameter side receiving die 151 and part of the outer circumferential surface of the second inner diameter side receiving die 152, respectively, the shape accuracy of the respective bend portions 137, 156 can be secured. Furthermore, the respective receiving dies 131, 151 and 152 can be removed from the inside or periphery of the third intermediate material 133 or the cage element 126 in such a state that the bending process is completed by rotating them until the phases of the concaved portions formed on the circumferential surfaces of the respective dies and the phases of the respective pillar element portions 125, 125 coincide with each other. Because of this, cages with good quality can be obtained stably by an industrial process which enables a mass production.

### (Embodiment 12)

Figs. 22 to 25 show Embodiment 12 of the invention. In the case of this embodiment, distal end portions of respective pillar element portions 125a, 125a are fitted in notches 157, 157 which are formed on an outer circumferential edge portion of the other rim portion 11b. A depth dimension of these respective notches 157, 157 with respect to a radial direction of the other rim portion 11b is made to coincide with a thickness dimension of the respective pillar element portions 125a, 125a. In the case of this embodiment, both side edges of the distal end portions of the respective pillar element portions 125a, 125a are notched by an amount equal to the thickness of the other rim portion 11b, so as to form narrowed width portions 158, 158 on the distal end portions of the respective pillar element portions 125a, 125a so as to fit in the respective notches 157, 157 without any gap. With these respective narrowed width portions 158, 158 fitted in the respective notches 157, 157, at least part of abutment surfaces between the respective narrowed width portions 158, 158 or both side portions of the respective narrowed width portions 158, 158 and inner surfaces of the respective notches 157, 157 is welded or bonded together, so as to join the distal end portions of the respective pillar element portions 125a, 125a to the other rim portion 11b.

In the case of the construction of the invention which is configured as has been described above, the positioning operation between the distal end portions of the respective pillar element portions 125a, 125a and the outer circumferential edge portion of the other rim portion 11b is implemented easily and in an ensured fashion. Namely, the positional relationship between the distal end portions of the respective pillar element portions 125a, 125a and the outer circumferential edge portion of the other rim portion 11b is determined unconditionally with respect to any direction of circumferential direction, axial direction and radial direction with the respective narrowed width portions 158, 158 bitted in the respective notches 157, 157. Because of this, the positioning operation is facilitated, whereby a cage 7 with good accuracy can be obtained in an ensured fashion, thereby making it possible to realize a reduction in costs because of an increase in yield. In addition, in the event that the positioning with respect to the axial direction can separately be controlled by an assembly robot, the respective narrowed width portions 158, 158 do not have to be formed on the distal end portions of the respective pillar element portions 125a, 125a. In this case, the width of the respective notches 157, 157 is made to coincide with the width of the distal end portion of the respective pillar element portions 125a, 125a.
Since the configurations and functions of the other portions including a manufacturing method and the like are similar to those of Embodiment 1 or Embodiment 2, the repetition of similar descriptions will be omitted.

### (Embodiment 13)

Figs. 26 to 31 show Embodiment 13 of the invention. In the case of this embodiment, distal end portions of respective pillar element portions 125b, 125b are fitted in notches 157a, 157a which are formed on an outer circumferential edge portion of the other rim portion 11b. In particular, in the case of this embodiment, stepped concaved portions 159, 159 in which a longitudinal dimension of the respective pillar element portions 125b, 125b is a dimension equal to the thickness of the other rim portion 11b are formed on inner circumferential surfaces of the distal end portions of the respective pillar element portions 125a, 125a so as to be recessed radially outwards. In addition, a depth dimension of the respective notches 157a, 157a which are formed on the outer circumferential edge portion of the other rim portion 11b with respect to a radial direction of the other rim portion 11b is made to coincide with a thickness dimension of the portions of the distal end portions of the respective pillar element portions 125a, 125a where the stepped concaved portions 159, 159 are formed. In addition, with the portions of the distal end portions of the respective pillar element portions 125a, 125a where the stepped concaved portions 159, 159 are formed fitted in the respective notches 157a, 157a, at least part of abutment surfaces between the distal end portions of the respective pillar element portions 125a, 125a and inner surfaces of the respective notches 157a, 157a is welded or bonded together, so as to join the distal end portions of the respective pillar element portions 125b, 125b to the other rim portion 11b.

Also, in the case of the construction of the invention which is configured as has been described above, as with Embodiment 3 that has been described before, the positioning operation between the distal end portions of the respective pillar element portions 125b, 125b and the outer circumferential edge portion of the other rim portion 11b is implemented easily and in an ensured fashion. Namely, with the portions of the distal end portions of the respective pillar element portions 125a, 125a where the stepped concaved portions 159, 159 are formed fitted in the respective notches 157a, 157a, the positional relationship between the distal end portions of the respective pillar element portions 125b, 125b and the outer circumferential edge portion of the other rim portion 11b is determined unconditionally with respect to any direction of circumferential direction, axial direction and radial direction. Because of this, the positioning operation is facilitated, whereby a cage 7 with good accuracy can be obtained in an ensured fashion, thereby making it possible to realize a reduction in costs because of an increase in yield.
Since the configurations and functions of the other portions including a manufacturing method and the like are similar to those of Embodiment 1 or Embodiment 2, the repetition of similar descriptions will be omitted.

Any method can be adopted for the method for forming the stepped concaved portions 159, 159 on the distal end portions of the respective pillar element portions 125b, 125b in order to obtain the construction of this embodiment. The stepped portions 159, 159 can be formed by performing a grinding process on the distal end portions of the respective pillar element portions 125b, 125b, as well. In the event that the stepped concaved portions 159, 159 are formed by the press process as is shown in Figs. 30 to 31, however, the working operation is implemented easily, a reduction in costs being thereby realized. Namely, a portion of a distal end portion of each tongue piece 122a, which is in a state resulting before the tongue piece 122a is bent relative to the circular ring portion of the one rim portion into the pillar element portion 125b {the state in (B) of Fig. 15 which has been described before}, which is to make up the stepped concaved portion 159 is pressed to be collapsed. Next, as is shown in Fig. 31, a portion which has spread in a surface direction in association with the collapsing process is removed (trimmed). The shape of the distal end portions of the respective pillar element portions 125b, 125b can be prepared to a desired shape as is shown in Fig. 29 by this operation.

In addition, as is shown in Fig. 32, a cage may be configured by a pair of cage elements 126 in which respective pillar element portions 125c, 125d are provided on both rim portions 11a, 11b. In this case, phases of both the rim portions 11a, 11b are made to coincide with each other so that the respective pillar element portions 125c, 125 are disposed alternately at uniform intervals, and distal end edges of the respective pillar element portions 125c which are formed on the one rim portion 11a are caused to butt an axial side surface of the other rim portion 11b on a portion which lies closer to an outside diameter side thereof so as to be welded, and furthermore, distal end edges of the respective pillar element portions 125d which are formed on the other rim portion 11b are caused to butt an axial side surface of the one rim portion 11a on a portion which lies closer to an outside diameter side thereof so as to be welded, whereby a cage is formed.

This patent application is based on the Japanese Patent Application (2005-126768) filed on April 25, 2005 and the Japanese Patent Application (2005-325104) filed on November 9, 2005, and all the contents thereof are incorporated herein by reference.

## Claims

1. A cage for radial needle bearing manufactured of a metal plate and comprising:
a pair of circular shape rim portions provided at both axial end portions so as to be parallel to each other; and
a plurality of pillar portions provided so as to be extended between both the rim portions,
wherein portions, four sides of which are surrounded by the pillar portions neighboring each other in a circumferential direction and both the rim portions are made into pockets for rotatably holding needles, and
wherein the respective pillar portions are configured by joining distal end portions of pillar element portions whose proximal end portions are made to continue to one rim portion of both the rim portions to the other rim portion or to distal end portions of pillar element portions whose proximal end portions are made to continue to the other rim portion.

2. The cage for radial needle bearing as set forth in Claim 1, wherein
one of distal end edge of the pillar element portions which are formed, respectively, on both the rim portions and are joined together at distal end portions thereof is made into a concavely curved edge and the other distal end edge is made into a convexly curved edge which engages with the concavely curved edge, whereby with phases of the respective pillar element portions made to coincide with each other with respect to a circumferential direction of the rim portion, the distal end edges of the respective pillar element portions are made to butt each other, and butted portions of the respective pillar element portions are welded together.

3. The cage for radial needle bearing as set forth in Claim 1, wherein
distal end edges of the respective pillar element portions which are formed, respectively, on both the rim portions are inclined alternately in opposite directions with respect to the circumferential direction of the rim portion and at the same angle, thereby causing the distal end edges which are inclined in the same direction to butt each other, with phases of the respective pillar element portions made to coincide with each other with respect to the circumferential direction of the rim portion, butted portions of the distal end edges of the respective pillar element portions are welded together.

4. The cage for radial needle bearing as set forth in Claim 1, wherein
distal end portions of the respective pillar element portions which are formed, respectively, on both the rim portions are connected to each other by bringing convexo-concave engaging portions which are provided, respectively, on inner circumferential surfaces of the distal end portions of the pillar element portions on the one rim portion and outer circumferential surfaces of the distal end portions of the pillar material portions on the other rim portion into convexo-concave engagement.

5. The cage for radial needle bearing as set forth in any of Claims 1 to 4, wherein
joint portions in which the distal end portions of the respective pillar element portions are joined together are provided in a position where rolling surfaces of needles held within the respective pockets do not contact the joint portions.

6. The cage for radial needle bearing as set forth in Claim 1, wherein
distal end faces of the respective pillar element portions which are formed on the one rim portion are welded or bonded to the other rim portion in such a state that the distal end faces are made to butt against portions on one axial side surface of the other rim portion which lie closer to an outer diameter side thereof

7. The cage for radial needle bearing as set forth in Claim 1, wherein
distal end portions of the respective pillar element portions formed on the one rim portion are fitted in notches formed on an outer circumferential edge portion of the other rim portion, and part of abutment surfaces between the distal end portions of the respective pillar element portions and inner surfaces of the respective notches is welded or bonded together.

8. The cage for radial needle bearing as set forth in Claim 1, wherein
stepped concaved portions which are recessed radially outwards are formed on inner circumferential surfaces of distal end portions of the respective pillar element portions formed on the one rim portion,
are portions of the distal end portions of the respective pillar element portions which lie in positions on the periphery of the stepped concaved portions are fitted in notches formed on an outer circumferential edge portion of the other rim portion,
elevated surfaces residing at end portions of the stepped concaved portions are made to butt an axial one side surface of the other rim portion, and
at least part of abutment surfaces between the distal end portions of the respective pillar element portions and inner surfaces of the respective notches is welded or bonded together.

9. A radial needle bearing comprising:
an inner ring corresponding member in which a cylindrical inner ring raceway is provided on an outer circumferential surface thereof;
an outer ring corresponding member in which a cylindrical outer ring raceway is provided on an inner circumferential surface thereof;
a plurality of needles which are rotatably provided between the inner ring raceway and the outer ring raceway; and
a cage for rotatably holding the respective needles,
wherein the cage is the cage for radial needle bearing set forth in any one of Claims 1 to 8.

10. A manufacturing method for a cage for radial needle bearing comprising:
are performing bending process and a punching process on a metal plate so as to make a cage element comprising a circular ring-shaped rim portion and a plurality of pillar element portions whose proximal end portions are continuous to the rim portion;
arranging the rim portion of the cage element and a rim portion which is worked separately concentrically with each other; and
joining distal end portions of the respective pillar element portions to the rim portion which is worked separately or distal end portions of a plurality of pillar element portions whose proximal end portions are made to continue, respectively, to the rim portion which is worked separately.

11. The manufacturing method for the cage for radial needle bearing as set forth in Claim 10, wherein
a circular ring portion which is to make up a rim portion and tongue pieces which are to make up pillar element portions extending radially outwards from a plurality of locations lying at equal intervals along an outer circumferential edge of the circular ring portion are formed by performing the punching process on part of a circular material plate and then,
the circular ring portion is bent in an axial direction of the circular ring portion at a portion which lies closer to an outer diameter side thereof together with the respective tongue pieces, so that these respective tongue pieces are made into pillar element portions.

12. The manufacturing method for the cage for radial needle bearing as set forth in Claim 10, wherein
a circular hole which lies on an inner diameter side of a portion which is to make up a rim portion and a plurality of preparation hole portions which are disposed along a periphery of the circular hole at equal intervals with respect to a circumferential direction is formed by performing the punching process on part of a circular material plate, then
the circular material plate is bent in one direction along the full circumference of a portion which lies between the circular hole and the preparation hole portions, so as to form a cylindrical portion whose proximal end portion is made to continue to the portion which is to make up a rim portion; and then
are portions which is part of the cylindrical portion and whose phases with respect to the circumferential direction match the respective preparation hole portions are removed from the respective preparation hole portions to a distal end edge of the cylindrical portion, so that portions between the portions which are removed with respect to the circumferential direction are made into respective pillar element portions.

13. The manufacturing method for the cage for radial needle bearing as set forth in Claim 10, wherein
a first intermediate material is manufactured by performing a punching process on part of a material plate, the first intermediate material comprising:
a non-circular preparation hole having an inside diameter which is smaller than an inside diameter of a portion which is to make up a rim portion in a radially central portion;
are pad portions which reside in the portion which is to make up a rim portion and portions which are to make up spaces between proximal half portions of respective pillar element portions in a radially intermediate portion; and
distal half portions of tongue pieces which are to make up distal half portions of the respective pillar element portions in a plurality of circumferential locations on a radially outer end portion,
thereafter, the radially intermediate portion of the first intermediate material is bent further at a radially intermediate position thereof along the full circumference thereof, so that the relevant portion is formed into an L-shape in cross section which is made up of a circular ring portion and a cylindrical portion, whereby a second intermediate material is made,
following this, the respective pad portions which are part of the cylindrical portion provided on the second intermediate material and which reside in the portions which are to make up the spaces between the proximal half portions of the respective pillar element portions are forcibly spread radially outwards, to thereby form a plurality of tongue pieces which are to make up the respective pillar element portions by cutting to separate both end edge portions in the circumferential direction of the respective pad portions from both end edge portions in the circumferential direction of the proximal half portions of the respective pillar element portions, whereby a third intermediate material is made,
following this, a surface pressing process is applied to portions which are exposed between the respective tongue pieces at an end edge of the cylindrical portion while forcibly spreading the respective pad portions of the third intermediate material radially outwards, and the radius of curvature of a continuous portion between the cylindrical portion and the circular ring portion is made small, whereby a fourth intermediate material is made,
following this, the respective pad portions are cut from a distal edge of the cylindrical portion, and a circular hole which matches an inside diameter of a portion which is to make up the rim portion is punched out in a central portion, whereby a fifth intermediate material is made, and
the respective tongue pieces of the fifth intermediate material are bent, whereby a cage element having the respective pillar element portions is made.

14. The manufacturing method for the cage for radial needle bearing as set forth in Claim 13, wherein
when making the first intermediate material into the second intermediate material, an elevated portion with respect to the circumferential direction is formed partially along the circumferential direction of the cylindrical portion in positions which lie substantially where both circumferential end edges of the respective pillar element portions are extended, whereby an outer circumferential surface of a portion of part of an outer circumferential surface of the cylindrical portion where proximal half portions of the respective pillar element portions are extended is made to be situated further radially inwards than outer circumferential surfaces of other portions of the cylindrical portion.

15. The manufacturing method for a cage for radial needle bearing as set forth in any of Claims 13 to 14, wherein
by performing a surface pressing process on portions which are exposed between the respective tongue pieces at the end edge of the cylindrical portion of the third intermediate material, whereby a fourth intermediate material is made, and furthermore, in such a state that the respective pad portions are cut to be removed from the distal edge of the cylindrical portion, whereby a fifth intermediate material is made, the cylindrical portion is made to disappear at the portions which are exposed between the respective tongue pieces, and portions with which axial end faces of the respective needles are brought into abutment are made to be situated on the same plane as an internal surface of the circular ring portion.

16. The manufacturing method for the cage for radial needle bearing as set forth in Claim 10, wherein
by performing a punching process on a metal plate, a circular ring portion which is to make up a rim portion and a plurality of tongue pieces which extend radially from an outer circumferential edge of the circular ring portion are formed, thereafter,
by bending these respective tongue pieces at right angles to the circular ring portion, straight-line pillar intermediate elements which are parallel to each other are made,
following this, a distal end portion of an inner diameter side receiving die on an outer circumferential surface on which convex portions and concaved portions are disposed alternately at equal pitches to the respective pillar intermediate elements to be worked is inserted into an inside of an inner half portion of these respective pillar intermediate elements in such a state that phases of the respective convex portions and phases of the respective pillar intermediate elements are made to coincide with each other with respect to a circumferential direction of the circular ring portion,
thereafter, outer circumferential surfaces of the respective pillar intermediate elements are pressed against an outer circumferential surface of the inner diameter side receiving die by an inner circumferential surface of a die, so that the respective pillar intermediate elements are made into respective second pillar intermediate elements in which a proximal end portion which resides in a portion which substantially matches the outer circumferential edge of the circular ring portion with respect to a radial direction of the circular ring portion is made to continue to an intermediate portion to a distal end portion which reside closer to an inner diameter side than the proximal end portion with respect to the radial direction of the circular ring portion via a bend portion lying closer to a proximal end,
thereafter, the inner diameter side receiving die is rotated relative to the circular ring portion until the phases of the respective concaved portions and the phases of the respective second intermediate elements come to match each other with respect to the circumferential direction of the circular ring portion, and
following this, the distal end portion of the inner diameter side receiving die is removed from the inside of the respective second pillar intermediate elements.

17. The manufacturing method for the cage for radial needle bearing as set forth in Claim 16, wherein
after the distal end portion of the inner diameter side receiving die is removed from the inside of the respective second pillar intermediate elements,
in such a state that an outer diameter side receiving die on which convex portions and concaved portions are disposed alternately on a portion which faces outer circumferential surfaces of longitudinally intermediate portions of the second pillar intermediate elements on an axially intermediate portion on an inner circumferential surface thereof at the same pitch as that of the respective second pillar intermediate elements is disposed on the periphery of the respective second pillar intermediate elements and a second inner diameter side receiving die having a similar construction to that of a distal end portion of the inner diameter side receiving die is disposed in an inside of longitudinal end portions of the respective second pillar intermediate elements which lie closer to the circular ring portion, a second die is forced into an inside of the other longitudinal end portions of the respective second pillar intermediate elements, so that the respective second pillar intermediate elements are held between the second die, the outer diameter side receiving die and the second inner diameter side receiving die and bend portions lying closer to the distal end which are bent in an opposite direction to the bend portions lying closer to the proximal end are formed between intermediate portions and distal end portions of the respective second pillar intermediate elements, whereby the respective second pillar intermediate elements are worked into pillar element portions, so as to make a cage element, and thereafter,
the outer diameter side receiving die and the cage element are rotated relative to each other until the respective concaved portions on the inner circumferential surface of the outer diameter side receiving die and phases of the pillar element portions coincide with each other, so that following this, the outer diameter side receiving die is removed from the periphery of the cage element, while the second inner diameter side receiving die is rotated relative to the circular ring portion until phases of the respective concaved portions and the phases of the pillar element portions coincide with each other with respect to the circumferential direction of the circular ring portion, so that following this, the second inner diameter side receiving die is removed from the inside of the cage element.
